# EUROPEAN PATENT SPECIFICATION

(11) **EP 4 363 296 B1**
(45) Date of publication and mention of the grant of the patent: **25.06.2025**
(21) Application number: 22736283.7
(22) Date of filing: 01.07.2022
(51) Int. Cl.: B62H 5/06, B62K 21/06, B62K 19/32

(54) **A BICYCLE STEERING COLUMN AND A BIKE HAVING AN INTEGRATED STEERING COLUMN LOCK**
FAHRRADLENKSÄULE UND FAHRRAD MIT INTEGRIERTEM LENKSÄULENSCHLOSS
COLONNE DE DIRECTION POUR BICYCLETTE ET BICYCLETTE COMPORTANT UN VERROU DE COLONNE DE DIRECTION INTÉGRÉ

(30) Priority: 02.07.2021 DK PA202170349; 10.02.2022 DK PA202270053
(43) Date of publication of application: 08.05.2024
(73) Proprietor: HNC Switzerland GmbH, 8200 Schaffhausen (CH)
(72) Inventor: LINDVED, Per, 2625 Vallensbæk (DK)
(74) Representative: Holme Patent A/S
(86) International application number: PCT/EP2022/068223
(87) International publication number: WO 2023/275340

(56) References cited:
- CN-U- 201 525 435
- CN-U- 205 601 971
- DE-A1- 19 741 643
- DE-C- 930 852
- DE-C1- 3 338 941
- SU-A1- 1 782 853

## Description

The present invention relates to a novel bicycle steering column comprising a head tube, a steerer tube and an integrated steering column lock.

The applicant's international patent application no. WO 2016/198340 discloses an external steering column lock for a bicycle. This known external steering column lock is a key lock commercially available under the trade name Velo Guard. The Velo Guard is an exterior lock mounted in connection with the fork crown, and it can be used as a replacement or as a supplement to the locking arrangement normally associated with the rear wheel of a bicycle. The Velo Guard steering lock locks the front wheel into a stable position and blocks the handlebars from turning which makes riding the bicycle impossible.

French patent application no. FR2947237A1 discloses a lock arranged in the steering column to be operated from above. This known lock is capable of operating an actuating rod which extends parallel to the longitudinal axis of the steerer tube to control a locking end of an anti-theft cable to lock the head tube from rotation relative to the steerer tube. The actuating rod extends over the entire height of the steerer tube and into the crown. Installation of this known steering column lock requires a complete re-design of existing front forks and it cannot be mounted in the steering column without reconstruction of the front fork.

Russian patent application SU1782853A1 discloses a simple manually operated steering column lock having an interior eccentric to, upon rotation, displacing opposite locking balls in and out of the locking holes in the steerer tube to achieve frictional engagement with the head tube. No lock components are placed in the space between the steerer tube and the head tube so the locking force is rather low and this known steering column lock is easy to break up. The steering column lock is mounted at the top of the steerer tube and it requires substantial modification of the bicycle steering column for its mounting.

German patent application no. DE 19741643 discloses a bicycle steering column lock of the kind mentioned in the preamble of claim 1.

Chinese utility model no. 205691971U discloses a bicycle front tube bluetooth lockset that can be remotely controlled via a bluetooth lock system that includes a motor and a magnetic eccentric wheel. When the motor rotates the magnetic eccentric wheel to a certain angle, the magnetic eccentric wheel pushes the end of a lock core into a cavity of the front tube, so that rotation of the bicycle shaft and the front tube in the axial direction is restricted and the bicycle is locked and cannot be ridden. CN 205 601 971 U is considered the closest prior art and discloses the following features of claim 1; a bicycle steering column comprising a head tube, and a steerer tube, and incorporating a steering column lock, the steering column lock comprises a first lock part having a first lock means and a second lock part having a second lock means, the first lock means is arranged in a radial space between the head tube and the steerer tube, the second lock means is arranged in the steerer tube to co-operate with the first lock means, and the second lock means comprises an electric motor, wherein the second lock means comprises at least one magnet.

An electric bike, often called an E-bike, offers a fast, easy and convenient way to drive around in an eco-friendly manner, so electric bikes are becoming an increasingly popular solution for bicyclists. The front fork of most electric bikes can be a rigid front fork but is usually a suspension fork designed to provide extra comfort. The front fork of an electric bike typically has a larger steering column diameter than the classic road bike for which the Velo Guard is designed. Electric bikes are very expensive and it is important for the owner to be able to lock it properly when not in use.

It is accordingly a main aspect of the present invention to provide an improved steering column lock.

In a further aspect of the present invention is provided a steering column lock that can be hidden inside the front fork.

In a further aspect of the present invention is provided a keyless steering column lock.

In a further aspect of the present invention is provided an electric steering column lock.

In a further aspect of the present invention is provided an integrated steering column lock for a bicycle.

In a further aspect of the present invention is provided an integrated steering column lock for an electric bike.

In a further aspect of the present invention is provided an integrated steering column lock for an electric bike, wherein the installation of the steering column lock does not require drilling holes in the walls of any of the head tube and steerer tube.

The novel and unique features whereby these and other aspects are achieved according to the present invention consist in that the bicycle steering column comprises a head tube, a steerer tube, and incorporating an integral steering column lock.

The steering column lock comprises a first lock part having a first lock means, and a second lock part having a second lock means, wherein the first lock means is arranged in a radial space between the head tube and the steerer tube, the second lock means is arranged in the steerer tube to co-operate with the first lock means, and the second lock means comprises an electric motor. Thus the first lock part is exterior to the steerer tube and the second lock part is interior to the steerer tube.

The first lock means and the second lock means are configured to, in a locking position of the steering column lock, serve as an anti-rotation means that in co-operation prevents the steerer tube and the head tube from rotating in relation to each other about the central axis of the steerer tube, and allows said steerer tube to rotate in relation to the head tube about said axis in an unlocked position of the steering column lock.

The first lock means is advantageously arranged in the radial space between the head tube and the steerer tube, which radial space allows the steerer tube to turn about its central axis and thus about the central axis of the head tube. At least a part of the first lock part may be welded or glued to the head tube to prevent axial displacement of said part, whereby said part of the first lock means can be arranged in the bicycle steering column without making holes in any of the steerer tube and the head tube.

The steering column lock may comprise at least one first displaceable component that is displaceable along the diameter of the steerer tube. The at least one first displaceable component may be displaced along the diameter of the steerer tube to facilitate the locking or non-locking co-operation between the first lock means and the second lock means by arranging the second lock means in a locking or non-locking axial position inside the steerer tube, thus in a locking or non-locking position along the length of the steerer tube.

The steering column lock may comprise at least one second displaceable component that is axially displaceable along the length of the steerer tube to shift the co-operation of the first lock means and the second lock means between a locking co-operation and a non-locking co-operation. The at least one second displaceable component can be displaced axially whereby at least a part of the second lock means can reciprocate inside the steerer tube.

The at least one second displaceable component, which is axially displaceable along the length of the steerer tube, may be at least one second displaceable component arranged in the steerer tube, or at least one second displaceable component arranged in the radial space between the head tube and the steerer tube, or be a combination of the aforementioned at least one second displaceable components, as will be explained in further details below.

The second lock means of the second lock part may comprise a first lock component that may comprise the at least one first displaceable component.

In preferred embodiments the second lock means may comprise two first displaceable components that are displaceable along the diameter of the steerer tube towards and away from each other, and moving means to displace said two first displaceable components in relation to each other along the diameter of the steerer tube to make the first lock means and the second lock means to co-operate.

In some embodiments opposite lock openings are provided in the wall of the steerer tube for enabling the second lock means to pass through the steerer tube to engage and disengage the first lock means in direct contact in the radial space between the head tube and the steerer tube.

However in alternative embodiments the first lock means and the second lock means can co-operate without any holes are made in the steerer tube. So the steering column lock may also be arranged in the bicycle steering column as an integrated, fully functional part of the bicycle steering column without making any structural weakening of, or damages to, any of said head tube and/or steerer tube. Thus the manufacturers of e.g. E-bikes need not make structural changes to the steering column to integrate the steering column lock.

The first lock component may be the component, or part of the components, of the second lock means that are axially displaceable along the length of the steerer tube to bring the second lock means in and out of the locking co-operation with the first lock means, however in an alternative embodiment the first lock component is in a fixed axial position.

The moving means may comprise a rotating part interposed between said two opposite first displaceable components, which moving means advantageously may be operatively coupled to the motor for rotating the rotating part about the axis of the steerer tube.

In one embodiment this rotation can be actuated by the motor to make the second lock means lock together with the first lock means via the opposite lock openings provided in the wall of the steerer tube upon displacing said opposite first displaceable components along the diameter of the steerer tube away from each other in response to a rotational movement of the rotating part.

In one embodiment the rotation of the rotating part reduces the radial extent of the first lock component inside the steerer tube to allow said first lock component to move up and down inside said steerer tube to achieve the locking position in response to the motor rotating the rotating part, thus allowing a short axial displacement of said first lock component.

In a preferred embodiment the second lock means may have two opposite first displaceable components, such as a first displaceable component that may comprise a first locking pawl having a first pawl head, another first displaceable component that may comprise a second locking pawl having a second pawl head that faces the first pawl head, and wherein the moving means may be configured for moving the opposite first and second pawls heads in relation to each other along the diameter of the steerer tube. The size and shape of said pawl heads may differ between embodiments of the steering column lock.

The first lock means may comprise a lock ring configured to be disposed and secured in the radial space between the head tube and the steerer tube, which lock ring may have a plurality of annularly spaced apart apertures in level with the lock openings to serve for passage of a part of the second lock means, for said first lock means to interlock with the second lock part when the rotating part rotates the opposite first displaceable components apart. Preferably the apertures are axially oblong, a.o. to allow some axial displacement of the first lock component, and for optimizing aligning with the lock openings.

To achieve interlocking of the first lock part and the second lock part, said second lock means may in one embodiment thus have a first lock component that has at least one first displaceable component that is displaceable along the diameter of the steerer tube to pass in and out of the lock openings of the steerer tube and into the apertures of the lock ring when said apertures and lock openings are aligned axially and radially, such as aligned in response to rotation of the steerer tube about the axis of the head tube.

In such an embodiment having opposite lock openings in the wall of the steerer tube the first locking pawl may have a first pawl end part opposite the first pawl head, and the second locking pawl may have a second pawl end part opposite a second pawl head that faces the first pawl head, in which case the first pawl end part and the opposite second pawl end part may be rather long to be able to reach through the lock openings of the wall of the steerer tube and into apertures of the first lock ring when the opposite pawl heads have been moved apart by the moving means. So in the locked position of one embodiment of the steering column lock of the present invention the first pawl end part and the opposite second pawl end part are forced radially apart and inserted into apertures of the lock ring of the first lock part, which is situated in the radial space between the steerer tube and the head tube, via the aligned lock openings of the steerer tube, thereby serving as opposite barrel bolts that prevents the steerer tube from rotation about the axis of the head tube, thus prevent turning of the front fork, as is essential to be able so safely ride the bicycle.

In an advantageous embodiment the first pawl head may have a first lower pawl head part, which has a first seat, and a first upper pawl head part, which has a first projection extending along the pawl axis from the first lower pawl head part. Similarly the second pawl head may have a second lower pawl head part, which has a second seat and a second upper pawl head part, which has a second projection extending along the pawl axis from the second lower pawl head part. Furthermore the first projection may have a first notch, and the second projection may have a second notch.

The first locking pawl and the second locking pawl may be identical, but turned in the same plane in relation to each other so that the pawl head parts face each other thereby arranging the pawl end parts to follow a diameter of the steerer tube in a position to e.g. pass into aligned lock openings and apertures.

A locking pawl is however not symmetrical along its lengthwise axis but designed so that the pawl heads can overlap along their length without increasing the combined circumcircle to more than the circumcircle of a single pawl head.

To achieve this the first lower pawl head part may be configured to mate into the second seat, and the second lower pawl head part may be configured to mate into the first seat, to thereby arrange the first notch and the second notch in communication with each other to define a lock cavity. The notches may in combination define the lock cavity for receiving the rotating part in order to move the opposite pawl heads in relation to each other, e.g. apart and towards each other, along the diameter of the steerer tube by the action of the engaging rotating part, upon said rotating part rotating about the axis of the steerer tube. Thus the rotating part may serve as a part of the moving means for moving the opposite pawl heads apart and together. The same reciprocation towards and away from each other of the opposite pawl head parts also takes place in embodiments without long protruding pawl end parts.

The second lock part may thus in some embodiments be arranged inside the steerer tube of the steering column and be adapted to mechanically engage and disengage the first lock part through the lock openings in the wall of the steerer tube thereby locking the steerer tube to the first lock part to prevent it from turning about the axis of the head tube.

A locking pawl may be configured as one single unitary component, or be assembled of several components when mounted inside the steerer tube.

Optionally also an extra enforcing ring may be added to the first lock part to structurally enforce the steering column lock radially, and keep the axial position of the first lock part in the above embodiment of a steering column lock having a second lock part with long pawl heads.

The lock openings of the wall of the steerer tube allow passage of a part of the second lock part through said wall. These lock openings can have any design and outline that allow such passage. The lock openings may be axially oblong to allow some axial displacement of the second lock means of the second lock part inside the steerer tube.

In case the radial space is too narrow to mount the first lock part in the radial space of the above embodiment of a steering column, and if the wall thickness(ses) of the opposite tubes allows it without damaging the structural stability of the steering column, the first lock part may comprise circumferential recesses made in one or both of the walls of the head tube and the steerer tube for receiving the remainder of a first lock part that would otherwise be excessive in size. An interior circumferential recess can e.g. be made in the interior face of the wall of the head tube and/or an exterior circumferential recess can e.g. be made in the exterior face of the wall the steerer tube. In these embodiments having one or more recesses these recesses may suffice to prevent axial displacement of the lock ring when the steering column lock is operated. The recesses may however require milling off material of the tubes which is less preferred by some manufacturers and incompatible with some national or international standards for bicycle locks.

In a preferred embodiment the rotating part may be at least slightly S-shaped and having opposite curved engagement wing parts and a shaft hole for receiving a drive shaft of the motor to allow the motor to rotate the rotating part up to about 90° about the rotation axis to push on the pawl heads when the opposite first pawl heads are to be spaced apart by being displaced along the diameter of the steerer tube. Optionally the rotating part may be configured similar to or partly as e.g. a wing nut.

An alternative embodiment of the steering column lock according to the present invention may utilize a first lock part and a second lock part that do not require holes in the wall of the steerer tube for passage of a first pawl end part and a opposite second pawl end part. So in this alternative embodiment of the steering column lock the first lock component has none, or substantially none, first pawl end part, and none, or substantially none, opposite second pawl end part, whereby the first lock component can be made very small and thus be fitted inside steerer tubes having very small diameters.

In such an embodiment of a steering column lock according to the present invention the first lock means may comprise at least one first magnet and the second lock means may comprise at least one second magnet, wherein said at least one first magnet and said at least one second magnet are arranged to be in magnetically attracted contact without being in direct contact. The magnetic attraction of the at least one second magnet to the at least one first magnet will make an axially displaceable component of the second lock part, to which the at least one second magnet is secured, to move along axially and bringing along an axially displaceable component of the first lock part to which the at least one first magnet is secured.

In this alternative embodiment of a steering column lock the second lock means may comprise an interior lock part having an exterior annular surface provided with the at least one second magnet. Preferably the interior lock part has at least three second magnets arranged annularly spaced apart on said exterior annular surface, more preferred four or more second magnets are provided annularly spaced apart on the exterior annular surface of said interior lock part, whereby the at least one second magnet can magnetically lock with the at least one first magnet in a strong and reliable manner. The number of magnets can be even or uneven. Preferably the number of first magnets and the number of second magnets are the same to achieve optimum magnetic attraction force.

The interior lock part may be an upper second displaceable component of the at least one second displaceable component that is axially displaceable along the length of the steerer tube. Preferably the interior lock part is hollow so that the electric motor, that is arranged to engage the rotating part of the first lock component, can be accommodated inside the interior lock part, thereby reducing the axial length of the steering column lock, as well as protecting and supporting the electric motor.

The second lock means may comprise a housing assembly in which the first lock component can be situated. Said housing assembly may comprise at least an upper housing, wherein said upper housing may have a top part with a socket part that provides for passage of at least a part of the electric motor for its drive shaft to engage a shaft hole of the rotating part of the first lock component. The socket part advantageously keeps the electric motor arranged vertically so that it does not vibrate or oscillate excessively, if at all, when it operates to rotate the rotating part of the first lock component. The top part of the socket part may be secured to the interior surface of the wall of the steerer tube to maintain a permanent optimum axial position of the upper housing, the first lock component and the electric motor. Thus in this alternative embodiment of a steering column lock the upper housing, the first lock component and the electric motor are not part of the components of the at least one second displaceable component that is axially displaceable along the length of the steerer tube.

The housing assembly may comprise a lower second displaceable component of the at least one second displaceable component, which lower second displaceable component can be an interior tubular housing having a breast means protruding towards the central axis of the steerer tube and being configured to engage the first lock component when said interior tubular housing is displaced axially in relation to the first lock component that is arranged inside said interior tubular housing. The interior tubular housing can be moved upwards in the steerer tube, thereby arranging the first lock component engaging below said breast means, whereby the first lock component will be arranged in a locked position in which the steering column lock is locked.

The interior tubular housing may have a tubular upper housing part above the breast means and an opposite tubular lower housing part below the breast means, which tubular upper housing part may engage the top part of the upper housing in anti-rotational manner. As said upper housing is firmly secured to the steerer tube it rotates when the steerer tube rotates. The interior tubular housing is displaced in relation to the upper housing to axially displace the interior lock part in response to displacement of said interior tubular housing axially.

The second lock part may comprise a holder adapted to hold the first lock component, which holder advantageously can be secured to the top part of the upper housing and have opposite slots for passage of opposite engagement wing parts of the rotating part upon forced rotation of the rotating part by the electric motor to unlock the steering column lock and set the first lock component free of the breast means, thereby allowing the interior tubular housing to move axially downwards away from the interior lock part. The holder prevents the first lock component from dropping off the electric motor, and thus the holder keeps the drive shaft of the electric motor in operative engagement with the shaft hole of the rotating part.

In an optional embodiment the upper housing may extend from the top part into a forked lower part having opposite upper housing legs configured to engage a female cable lock part of a cable lock coupling means, and/or engage a free end of the interior tubular housing, such as the tubular lower housing part, in case the steering column lock is provided without a cable lock coupling means. The opposite upper housing legs holds onto any of a female cable lock part or the free end of the tubular lower housing part to avoid unintended separation of upper housing and female cable lock part and/or tubular lower housing part.

The female cable lock part can preferably be configured to be situated protruding inside the tubular lower housing part and serve as an end closure of said tubular lower housing part, and/or serve as the push-button at which the operator pushes to move the second lock part inside the steerer tube to lock the steering column lock.

In an embodiment of a steering column lock having additional anti-theft means in form of a cable lock, the female cable lock part may comprise a cable lock ring surrounding the tubular lower housing part of the interior tubular housing, and a cable lock housing mounted at least partly inside the tubular lower housing part of the interior tubular housing and being configured to receive and interlock with a male locking part of a cable lock, wherein the cable lock ring is interconnected with the cable lock housing via assembling means, wherein at least a part of the assembling means extends through a circumferential wall of the tubular lower housing part of the interior tubular housing so that the cable lock housing does not come along when the female cable lock part is decoupled but so that the cable lock housing can be displaced axially in relation to cable lock ring, optionally pushed on, to displace the interior tubular housing.

In another preferred embodiment of the bicycle steering column according to the present invention the female cable lock part may comprises a traverse lock body, a cover part fixed in axial position along its circumference to the tubular upper housing part of a modified interior tubular housing, and a fifth spring having free ends secured to a chord of the circumference of the cover part and extending inclined and axially downwards below said cover part. The tubular lower housing part of the modified interior tubular housing may convieniently have opposite first slide tracks configured for receiving the cross bar arms when the modified interior tubular housing reciprocates axially to lock a cable lock part of a cable lock together with the traverse lock body.

For the purpose of such interlocking the traverse lock body may comprise an upper tubular cable housing wherefrom the opposite cross bar arms protrudes diametrically opposite. The upper tubular cable housing may have a plug hole adapted to accommodate the cable lock part of the cable lock, and the tubular lower housing part of the interior tubular housing may have opposite first slide tracks receiving the cross bar arms when the interior tubular housing reciprocates up and down inside the steerer tube.

An O-ring may be interposed between the tubular lower housing part of the interior tubular housing and a lower bushing collar part of a lock bushing that surrounds said tubular lower housing part of said the interior tubular housing to prevent entry of moisture and dirt between the interior tubular housing and the lock bushing.

The cover part may advantageously be disposed inside the modified interior tubular housing between the first lock component and the female cable lock part to prevent access to the functional components of the steering column lock via the female cable lock part provided for inserting the cable lock part, e.g. to deprive a thief the possibility of tampering with the first lock component, e.g. by using a screw driver to actuate the opposite locking pawls. Such a screw driver cannot pass by the cover part.

An O-ring my be interposed between the tubular lower housing part and the cable lock ring to further seal and prevent access of dirt and moisture into the steering column lock.

In the above alternative embodiment of a steering column lock according to the present invention the first lock means may comprise a first ring-shaped lock part and a second ring-shaped lock part arranged in a tubular casing of the first lock part. The tubular casing itself may be secured to an interior face of the head tube so that it neither rotates nor displace axially in relation to the head tube when the steering column lock is operated. Some components inside said tubular casing may however rotate and/or displace axially. The first ring-shaped lock part may be secured at a top part of the tubular casing and the second ring-shaped lock part may be arranged axially and reciprocatingly displaceable below the first ring-shaped lock part. So in contrast to the first ring-shaped lock part the second ring-shaped lock part can be arranged displaceable inside the tubular casing, with said second ring-shaped lock part surrounding the steerer tube and magnetically engaging the interior lock component which is situated around the steerer tube. So when the interior lock component rotates the second ring-shaped lock component rotates along about the axis of the steerer tube as well due to the magnetic attraction between the first and the second magnets.

The first lock part may comprise a lower lock ring, which is secured to the steerer tube at a bottom part of the tubular casing, as a means to prevent rotation of the second ring-shaped lock part in relation to the steerer tube.

Optionally the lower lock ring may be positioned to allow and/or control an axial displacement of the second ring-shaped lock part within the tubular casing, wherein such axial displacement may have a travel length shorter than a travel length at which the lower lock ring and the second ring-shaped lock part disengage axially.

The first ring-shaped lock part may have a first engagement means arranged at a lower first circumferential edge part and the second ring-shaped lock part may have a second engagement means arranged at an upper second circumferential edge part, which second engagement means faces the first engagement means.

The second engagement means may advantageously be configured for
- engaging the first engagement means when the second ring-shaped lock part is in an upper axially displaced position in which the steering column lock is locked and cannot rotate about the central axis of the steerer tube, and
- disengaging the first engagement means when the second ring-shaped lock part is in a lower axially displaced position in which the steering column lock is not locked and the second ring-shaped lock part can rotate along about the central axis of the steerer tube.

The first engagement means and the second engagement means may have any complementary structure suited for the mutual engagement. One of said engagement means may feature a female configuration or structural component configured to receive a mating male configuration or structural component of the other engagement means.

For example the first engagement means that is arranged at the lower first circumferential edge part of the first ring-shaped lock part can be the complementary spaces between a plurality of annularly spaced apart axially protruding first teeth, thus female structural components, and the second engagement means at the upper second circumferential edge part of the second ring-shaped lock part can be at least one axially protruding second tooth configured to engage such a complementary space, thus a male structural component, between adjacent first teeth of the first engagement means. The opposite arrangement is also possible and it is clear to the skilled person that a tooth/teeth of one engagement means fits/fit in the space between opposite teeth of the other engagement means.

The axially displaceable second ring-shaped lock part can travel a locking length that brings the first engagement means and the second engagement means in and out of engagement. Preferably said locking length corresponds to at least the length of the at least one axially protruding second tooth and is shorter than the travel length at which the lower lock ring and the second ring-shaped lock part may disengage.

The second ring-shaped lock part may comprise the at least one first magnet to thereby make the interior lock part, that has the at least one second magnets, the part of the second lock part that brings the second ring-shaped lock part along to make the first engagement means and the second engagement means interlock or not interlock, in the respective locking position and not locked position by turning of the steerer tube in relation to the head tube.

The at least one first magnet can be arranged on an interior annular surface of the second ring-shaped lock part. Preferably the second ring-shaped lock part may have at least three first magnets arranged annularly spaced apart along said interior annular surface. More preferred eight first magnets may be provided on an interior annular surface of the second ring-shaped lock part. The first magnet(s) can thus advantageously be arranged in magnetically attracted relationship with the at least one second magnet, and the steering column lock achieve a locked position in any desired rotated position of the steerer tube.

To achieve the locking position of this embodiment of a steering column lock the operator may manually move the interior tubular housing axially whereby the first lock component can be brought to engage below the breast means of said interior tubular housing and whereby the first engagement means and the second engagement means interlock to assume the locking position due to the interior lock part magnetically brings the second ring-shaped lock part along towards the first ring-shaped lock part. This manual action can be achieved by pushing from below at the tubular casing of the first lock part to move said interior tubular housing inside the steerer tube.

To release the steering column lock from the locking position the electric motor is started whereby the first lock component's at least one first displaceable component(s) is/are moved free of the breast means thereby allowing the interior tubular housing to move downwards whereby the interior lock part can also move downwards bringing the second ring-shaped lock part along due to the magnetic attraction between the first magnet (s) and second magnet (s). Thereby is the mutual engagement between the first engagement means of the first ring-shaped component and the second engagement means of the second ring-shaped component released, thereby allowing the steerer tube, and thus the front fork, to move from side to side when riding the bicycle or the E-bike.

The lower lock ring and the second ring-shaped lock part may be provided with co-operating first and second anti-rotation means, respectively. As a non-limiting example the first anti-rotation means may comprise a first slide means and the second anti-rotation means may comprise a second slide means for slidingly engaging the first slide means to control the axial travel of the second ring-shaped lock part between the lower lock ring and the first ring-shaped lock part inside the tubular casing, as described above.

The first slide means may comprise a plurality of protruding slide legs, and the second slide means may comprise a corresponding number of slide grooves configured for accommodating the plurality of protruding slide legs in axially sliding engagement.

The tubular casing should preferably be made of a non-magnetic material, such as a lightweight material such as a plastic composite material or aluminium, through which the strong magnetic attraction between the first magnet(s) and the second magnet(s) can take place to move the second ring-shaped lock part in response to moving the interior lock part, and without any holes are made in any of the walls of the steerer tube and the head tube. Thus the steering column lock can be installed and operated without the mechanical and physical structures of the steering column is adversely affected or needs mechanical deteriorating processing.

The bicycle steering column lock of the present invention may comprises one or more of that
- an annular interior face of the lower lock ring has first knurlings as an anti-rotation means in relation to the steerer tube,
- the lower lock ring is secured to the steerer tube, optionally by means of glue, optionally further or alternatively secured by means of first lock pins,
- an annular exterior face of the bottom part of the tubular casing has second knurlings as an anti-rotation means in relation to the head tube,
- the tubular casing is secured to the head tube, optionally by means of glue,
- the top part of the upper housing is secured to the steerer tube, optionally by means of glue,
- the second knurlings are provided at an annular exterior face of a ring-shaped extension part of the bottom part of the tubular casing, which ring-shaped extension part adds weight to the tubular casing to further resist axial displacement,
- the ring-shaped extension part can be a steel ring that can both provide the desired weight to the tubular casing, as well as the second knurlings are easily made in steel material.

Another alternative steering column arrangement comprises both at least one first displaceable component that is displaceable along the diameter of the steerer tube and at least one second displaceable component that is axially displaceable along the length of the steerer tube. In this alternative embodiment of a first lock component the moving means for moving the opposite first pawl head and second pawl head in relation to each other along the diameter of the steerer tube may comprise a cone-shaped member that is axially displaceable inside the steerer tube and arranged to pass between the first locking pawl and the opposite second locking pawl that are arranged on same diameter of the steerer tube thereby moving the opposite pawl heads apart and the opposite first pawl end part and second pawl end part into the aligned lock openings of the steerer tube and apertures of the first lock part to lock the steering column lock in any desired rotated position of the steerer tube.

In this embodiment the first locking pawl and the second locking pawl can have a respective first tubular pawl head and second tubular pawl head that can extend via a first pawl collar and a second pawl collar, respectively, into its corresponding respective first pawl end part and second pawl end part.

Preferably, and in order to keep the locking force as high as possible, a third spring may be provided. Said third spring may be mounted on one or both of the first pawl end part and the second pawl end part to be compressed against the respective collars, and be dimensioned to oppositely abut the circumferential wall of the steerer tube. In this configuration a compression spring force may build up when the cone-shaped member moves the first locking pawl and the second locking pawl apart, which compression force subsequently can be utilized to force the pawl heads against each other again when the cone-shaped member is retracted from the locking position between the pawl heads, thus from its engagement with the pawl heads.

The means for displacing the opposite pawls heads along the diameter of the steerer tube in relation to each other may further comprise at least a spring-biased stanchion that is arranged axially displaceable inside the steerer tube to engage the second lock part, e.g. to actuate that the cone-shaped member or the rotating part displaces the locking pawls radially apart. The axial distance that the spring-biased stanchion can travel inside the steerer tube may e.g. correspond to the height of the lock openings.

All embodiments of the steering column lock of the present invention may further comprise one or more of a rechargeable battery to power the electric motor, a USB socket to charge the rechargeable battery, and a Bluetooth enabled printed circuit board, which has an antenna to receive first operation signals from a remote device and send second operation signal to the Bluetooth enabled printed circuit board to operate the electric motor to move the at least one first displaceable component that is displaceable along the diameter of the steerer tube.

The steering column lock may further comprise a push-button arranged accessible at a free end of the steerer tube to manually lock the steering column lock. The push-button may in one embodiment actuate the axial displacement of at least a part of the second lock part, e.g. the axial displacement of the interior housing or of the spring-biased stanchion.

Any embodiment of the steering column lock of the present invention may comprise a safety mechanism arranged at a free end of the steerer tube, and arranged in axial extension of the steering column lock, thereby facilitating mounting of the cable lock. The safety mechanism may comprise a lock bushing, a push-button in form of a cable lock housing, a trigger mechanism for axially displacing the cable lock housing upwards against the traverse lock body to compress a fourth spring upwards towards the first lock component. Advantageously the safety mechanism can have a safety button that is arranged in co-operative relationship with the cable lock housing, and being arranged to be released before the steering column lock can be finally locked, e.g. magnetically locked as described above.

The trigger mechanism may comprise a trigger housing, and a lever pivotably connected to the trigger housing to actuate displacing of the cable lock housing, wherein the lever may have a first through-going hole configured for passage of a lock part of a cable lock into the cable lock housing and into the plug hole of the traverse lock body to be held locked together with said the traverse lock body by the action of the fourth spring, which preferably is a U bend spring wire.

The trigger mechanism may further comprise a dust cover reciprocatingly arranged in relation to the longitudinal axis of the lever on top of said lever. The dust cover is thus arranged to cover the first through-going hole of said lever when no cable part is inserted into the plug hole of the traverse lock body, and to uncover the first through-going hole of said lever when a cable part is to be inserted into the plug hole of the traverse lock body.

The lever may conveniently be arranged to protrude between the lower legs of the front fork and radially towards the rider of the bike, so that the rider has easy access to the lever of the safety mechanism. The safety mechanism ensures that the steering column lock does not accidentally lock during a ride.

The rechargeable battery, the USB socket, the corresponding electric wires, and the Bluetooth enabled printed circuit may be accommodated in any appropriate accessible space of or between the components of the steering column lock, the head tube and/or steerer. In e.g. the embodiment provided with a stanchion, said stanchion may have a hollow stanchion leg thereby delimiting a bore, so that the USB socket can be mounted in the bore of the stanchion leg to charge the rechargeable battery that delivers power to the electric motor.

At least the unlocking of the steering column lock may be controlled by a Bluetooth enabled printed circuit board, that from its antenna can receive control and operation signals from a remote device, to in some embodiments of a steering column lock rotate the rotating part or in other embodiments move the cone-shaped member axially backwards towards the free end of the steerer tube. The remote device can e.g. be a mobile phone with a suitable software application or a remote control specifically designed to control the steering column lock.

The battery may supply power to the electric motor to unlock the steering column lock. Yet an option is that the push-button is powered, so that it only can be pushed upwards when power is switched on.

The steering column lock of the present invention may comprise a light-emitting diode (LED) or a beeper, e.g. arranged in or at the push-button to issue alerts when the first operation signals are received by the Bluetooth enabled printed circuit board to help the rider to identify the location of the bike.

The steering column lock of the present invention is in contrast to conventional steering column locks mounted integrated in the steering column opposite the handlebars of the bicycle in the front fork of said bicycle, not at the handlebars.

The steering column lock of the present invention is especially suited for an E-bike, in particular an E-bike with a suspension fork that has plenty of space for reaching the end of the steerer tube opposite the handlebars to touch and activate the push-button and the safety mechanism by hand, and to charge the battery via the USB socket. The push-button may be of the kind having fingerprint recognition.

The steering column lock of the present invention may be used on any vehicle having sufficient space for the first lock part and the second lock part.

The invention will now be described in further details by way of illustrative non-limiting examples shown in the drawing in which
Fig. 1 is a perspective view of a fragment of a front fork without a steering column lock,
Fig. 2 is an axial, partly sectional view, showing the same front fork as seen in fig. 1 provided with a first not claimed embodiment of a steering column lock, wherein the steering column lock is shown without wiring, battery, and means for starting and stopping the motor,
Fig. 3 is a perspective view of a first not claimed embodiment of a second lock part of the first not claimed embodiment of a steering column lock in an assembled unlocked state,
Fig. 4 is a perspective exploded view of the same,
Fig. 5a shows, in perspective, a first lock component of the second lock means of the second lock part of the first not claimed embodiment of a steering column lock in assembled state with an electric motor,
Fig. 5b shows the same in exploded view without the motor,
Fig. 5c shows the same in locked position,
Fig. 5d shows the same in unlocked position,
Fig. 6 is a perspective view of the lock ring of the first lock part for the first not claimed embodiment of a steering column lock,
Fig. 7 shows the same as fig. 2 but seen inside the steerer tube,
Fig. 8 is an exploded view of parts of the first lock component and of the second lock part of a second not claimed embodiment of a steering column lock of the present invention, without showing upper housing, lower housing, battery, wiring, USB socket, and circuit boards,
Fig. 9 shows the same mounted inside a steering column, and in locked state,
Fig. 10 shows the same in unlocked state,
Fig. 11 is an exploded perspective view of a modified first lock component for the first not claimed embodiment of a steering column lock, and seen from above,
Fig. 12 shows the same seen from below,
Fig. 13 shows the same in assembled state in a perspective side view.
Fig. 14 is an axial view inside a front fork for an E-bike, which front fork is provided with a third embodiment of a steering column lock, wherein the steering column lock is shown without wiring, battery, and means for starting and stopping the motor, and is in locked state,
Fig. 14a is a partial axial view of fig. 14,
Fig. 15 is a perspective exploded view of an embodiment of a first lock part for the third embodiment of a steering column lock,
Fig. 16 is a perspective exploded view of an embodiment of a second lock part for the third embodiment of a steering column lock,
Fig. 17 is a perspective exploded view of an embodiment of a first lock component for the third embodiment of a steering column lock,
Fig. 18 shows the same in assembled state and with the first lock part in a configuration in which the first spring is compressed and the rotating part is in a position that enables the first lock part to pass by the annular breast of the tubular casing,
Fig. 19 shows the same but with the rotating part in a configuration in which the first spring is more relaxed and the rotating part is in a position in which the first lock part cannot pass by the annular breast of the tubular casing,
Fig. 20 shows, in a perspective side view, the first lock component for the third embodiment of a steering column lock with an electric motor,
Fig. 21 shows the same mounted inside the upper housing and in assembled state,
Fig. 22 is a partially exploded perspective view of the same,
Fig. 23 shows the same as fig. 21 but seen from below,
Fig. 24 shows the second lock part of the third embodiment of a steering column lock in assembled state,
Fig. 25 is a perspective view of a cable lock for optional use with the third embodiment of a steering column lock,
Fig. 26 corresponds to fig. 14 but with the third embodiment of a steering column lock in unlocked state,
Fig. 26a is a partial axial view of fig. 26,
Fig. 27 shows a fragment of fig. 26a without the holder, and with the third embodiment of a steering column lock in locked state,
Fig. 28 shows a modified interior tubular housing configured to operate a cable lock coupling means,
Fig. 29 shows the second not claimed embodiment of a cable lock coupling means in a perspective sectional view taken along line XXVIII of the modified interior tubular housing seen in fig. 28 ready to lock with a cable lock part of a cable lock,
Fig. 30 shows the same locked together with the cable lock part,
Fig. 31 is a perspective side view of a cable lock part retainer means in form of a modified female cable lock part without inserted cable lock part,
Fig. 32 shows the same with inserted cable lock part,
Fig. 33 corresponds to the view of fig. 31, but seen from below,
Fig. 34 corresponds to the view of fig. 32, but with detached cable lock part,
Fig. 35 is a perspective general view of the third embodiment of a steering column lock provided with a safety mechanism for a cable lock,
Fig. 36 shows in, an exploded perspective view, individual components of the safety mechanism seen in fig. 35,
Fig. 37 shows the safety mechanism seen in fig. 36 in assembled state,
Fig. 38 is a sectional view taken along line XXXVII in fig. 37, without a cable lock, and in unlocked condition of the safety mechanism with closed dust cover,
Fig. 39 shows the same, without a cable lock, but with pivoted lever to move the modified interior tubular housing of the safety mechanism to achieve a locking condition of the safety mechanism, and
Fig. 40 shows the same with the lever pivoted back to its starting position and with the dust cover retracted to be ready for the modified interior tubular housing to receive the cable lock part of a cable lock so that said cable lock part can snap into an upper tubular cable housing of a traverse lock body of a modified female cable lock part of a cable lock coupling means.

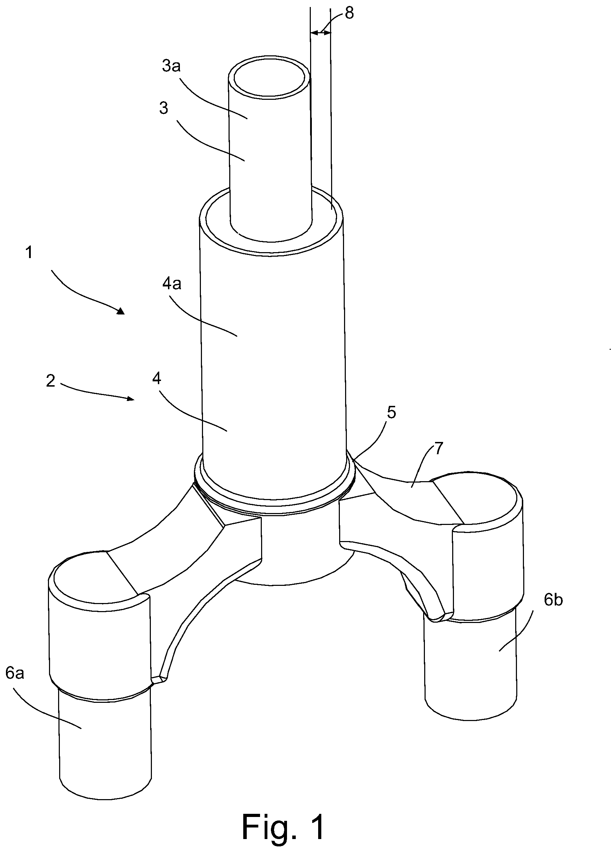

Fig. 1 is a perspective view of a fragment of a front fork 1, e.g. a suspension front fork of an E-bike (not shown).

The front fork 1 has a bicycle steering column 2 comprising a head tube 4 and a steerer tube 3. The steerer tube 3 extends via a crown member 5 and an arch member 7 into two opposite lower legs 6a,6b. The free ends of the opposite lower legs 6a, 6b are secured on the opposite sides of the shaft of the front wheel (not shown). A radial space 8 is delimited between the circumferential wall 3a of the steerer tube 3 and the circumferential wall 4a of the head tube 4. According to the present invention the radial space 8 is utilized to arrange and secure a first lock part, as will be seen and described in the following in more details with references to the figures that show various embodiments of steering column locks of the present invention.

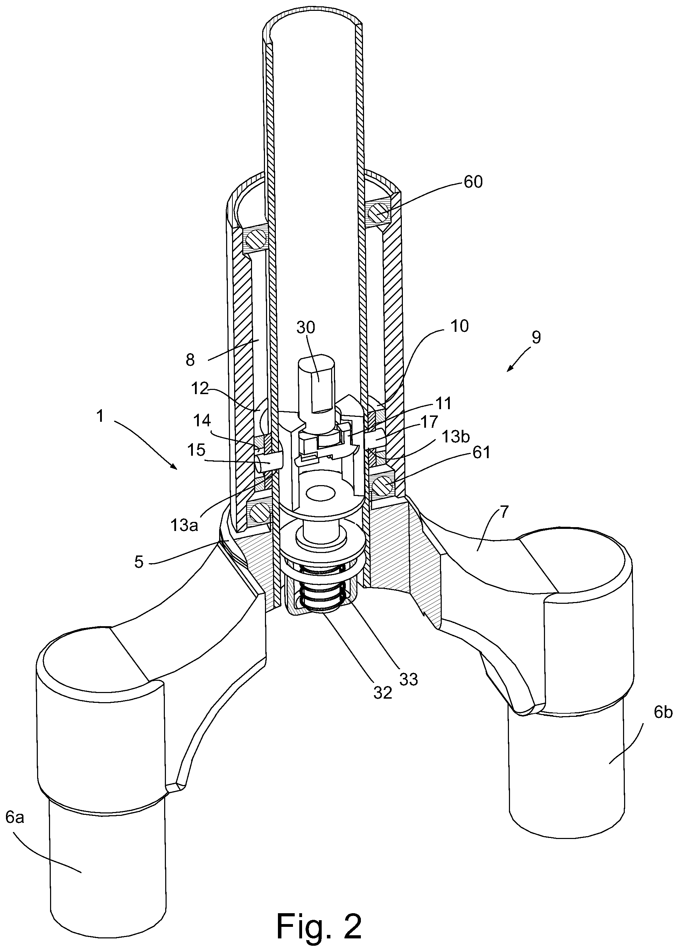

In fig. 2 the front fork 1 is seen in partial, axial, sectional view to visualize that the front fork 1 has been equipped with an integrated first not claimed embodiment of a steering column lock 9 having a first lock part 10 having a first lock means and a second lock part 11 having a second lock means.

The first lock means of the first lock part 10 comprises a lock ring 12, which is situated in the radial space 8 and being surrounded by a reinforcing ring 12a, which lock ring 12 has a plurality of circumferentially spaced apart oblong apertures 14.

The second lock means comprises that the circumferential wall 3a of the steerer tube 3 has diametrically opposite lock openings 13a,13b to be aligned with the plurality of circumferentially spaced apart oblong apertures 14 of the lock ring 12 of the first lock means for receiving an interlocking component of the second lock means of the second lock part 11, which second lock part 11 is seen mounted inside the steerer tube 3 in fig. 2. The opposite lock openings 13a,13b and the plurality of circumferentially spaced apart oblong apertures 14 ensures that the steerer tube can be locked in multiple rotated positions.

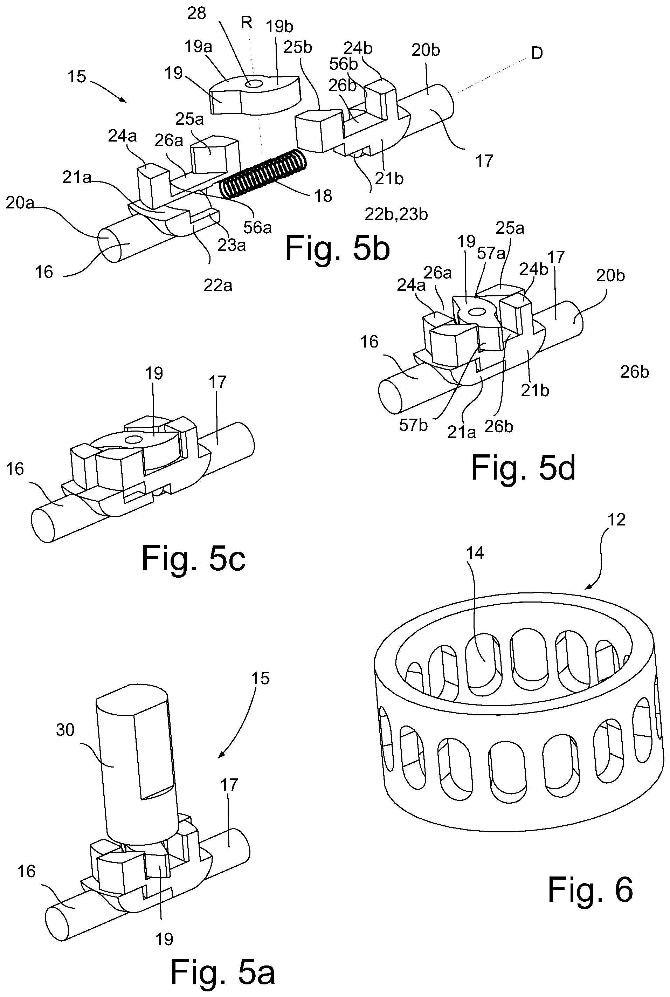

The second lock means of the second lock part 11 is shown in various modes of operation in figs. 5a-d.

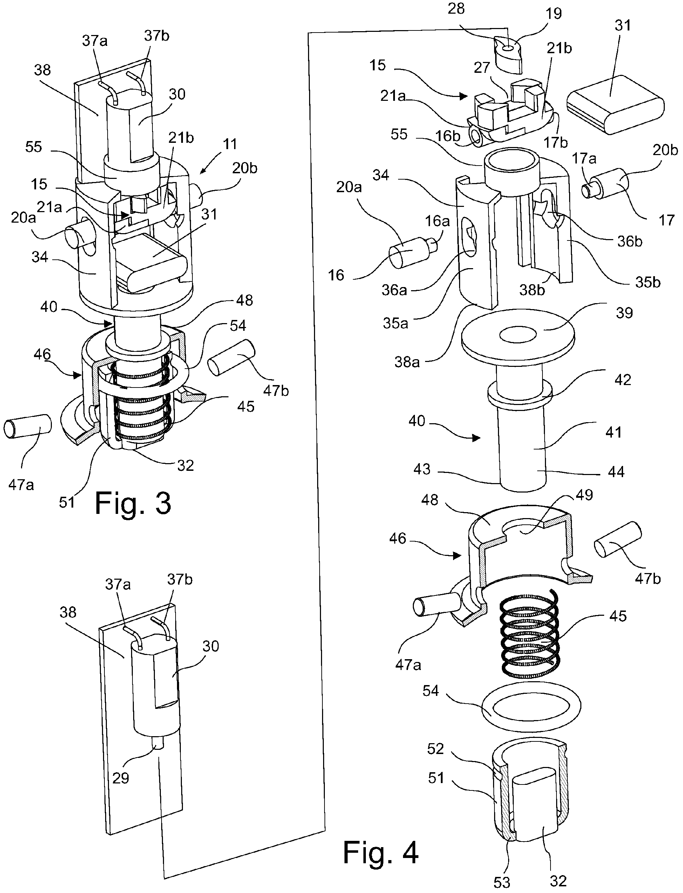

A part of the second lock means of the second lock part 11 of the first not claimed embodiment of a steering column lock 9 is configured as a first lock component 15 that comprises a first locking pawl 16 and a second locking pawl 17, which are arranged spring-biased in relation to each other along a diameter of the steerer tube 3 by means of an interposed first spring 18, and a rotating part 19 that engages with said locking pawls 16,17. In figs. 3 and 4, the steering column lock 9 is unlocked, and the first spring 18, which is not visible, is relaxed. The first spring 18 is however visual in the exploded view of fig. 5d of the first lock component 15, and the first spring 18 is also seen in fig. 5c placed under tension by the rotating part 19 that moves the first locking pawl 16 and the second locking pawl 17 apart against the spring force of said first spring 18 when subjected to a rotation force about its central rotation axis R, e.g. when the rider of the bike starts an electric motor 30 to reverse the rotation of the rotating part 19 that resulted in the locking of the steering column lock 9, thereby allowing the first spring 18 to relax again, as seen in fig. 5d, and the second lock part 11 to disengage the first lock part 10.

The complementary design of the locking pawls 16,17 and of the rotating part 19 allows the rotating part 10 to engage the locking pawls 16,17 to achieve the required radial displacement of said the locking pawls 16,17 for locking and unlocking the steering column lock 9, whereby said opposite locking pawls constitute two first displaceable components that are displaceable towards and away from each other along the diameter of the steerer tube 3.

The first locking pawl 16 has a first pawl end part 20a opposite a first pawl head 21a, and the second locking pawl 17 has a second pawl end part 20b opposite a second pawl head 21b. The first pawl head 21a has a first lower pawl head part 22a, which has a first seat 23a, and a first upper pawl head part 24a, which has a first projection 25a extending along and offset the pawl axis D from the first lower pawl head part 22a, which first projection 25a has a first notch 26a. The first seat 23a and the first projection 25a extend as opposite axial half parts of the first pawl head 21a lengthwise in extension of the first pawl end part 20a.

The second locking pawl 17 is identical to the first locking pawl 16, but is turned 180°. Like parts of the second locking pawl are indicated by replacing the "a" in the reference number by a "b".

Accordingly, the second pawl head 21b has a second lower pawl head part 22b, which has a second seat 23b, and a second upper pawl head part 24b, which has a second projection 25b extending along the pawl axis D from the second lower pawl head part 22b, which second projection has a second notch 26b. The second seat 23b and the second projection 25b extend as opposite axial half parts of the second pawl head 21b lengthwise in extension of the second pawl end part 20b.

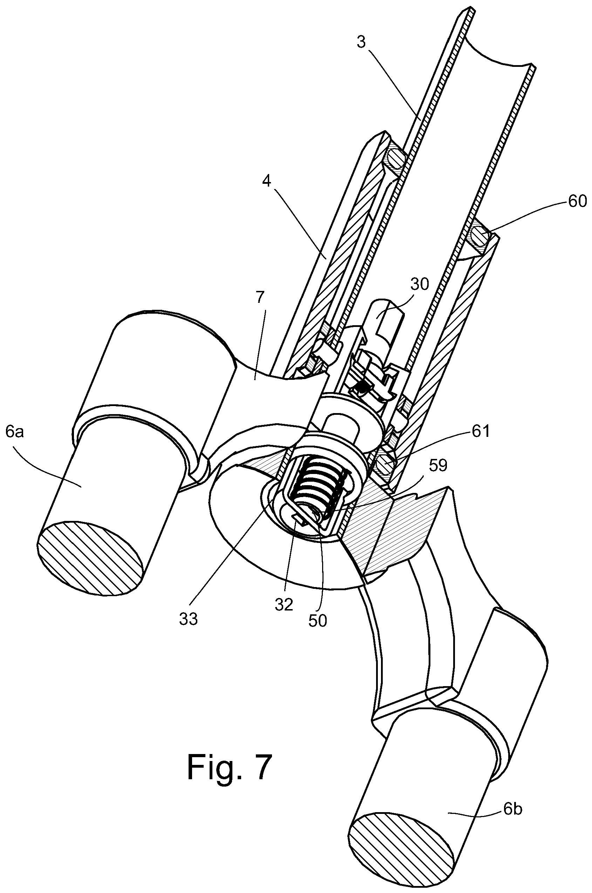

Due to the seats 23a,23b and the projections 25a,25b being axial opposite half parts on opposite sides of the pawl axis D, as seen best in figs. 5c and 5d, the first lower pawl head part 22a is configured to mate into the second seat 23b, and the second lower pawl head part 22b is configured to mate into the first seat 23a, to thereby arrange the first notch 26a and the second notch 26b in communication with each other to define a lock cavity 27 for accommodating and engaging the rotating part 19. The rotating part 19 rotates about its rotation axis R, which preferably is substantially coaxial with the axis of the steerer tube 3. In the exemplary first not claimed embodiment the rotating part 19 is slightly S-shaped having opposite curved engagement wing parts 19a,19b radiating from a central shaft hole 28. It could be said that the rotating part is configured substantially as a wing nut 19 having a first wing part 19a, a second wing part 19b, and a central shaft hole 28 for receiving a drive shaft 29 of a drive means for unlocking the steering column lock 9. The drive means is an electric motor 30, as shown in figs. 4 and 5a. The electric motor 30 can be powered by a rechargeable battery 31 connected to an USB socket 32, which USB socket 32 as an example can be arranged at an open end 33 of the steerer tube 3 that is disposed through the arch member 7, thus opposite the handlebars (not shown), thereby facilitating charging the bicycle steering column lock from outside the bicycle, as seen in fig. 7.

As seen best in figs. 3 and 4 the first lock component 15 of the second lock part 11 is situated in, and carried by, a forked upper housing 34. The upper housing 34 has opposite upper housing legs 35a,35b with axially oblong upper housing holes 36a,36b. The pawl end parts 20a,20b pass through the oblong upper housing holes 36a,36b to be exterior to the opposite upper housing legs 35a,35b with the engaging pawl head parts 22a,22b arranged between said opposite upper housing legs 35a,35b. In the unlocked position seen in figs. 3 and 4 the pawl end parts 20a,20b are at the top of the oblong upper housing holes 36a,36b but is able to travel axially a short length along the central axis of the upper housing 34 to enter the locked position. Thus the first lock component 15 with the electric motor 30 in the central shaft hole 28 constitute the least one second displaceable component that is axially displaceable along the length of the steerer tube 3. The battery 31 is also arranged between the upper housing legs 35a,35b and is connected to the electric motor 30 via electric wires 37a,37b to rotate the rotating part 19 to unlock the steering column lock 9.

The first lock component 15 seen in fig. 3 has a first locking pawl 16 wherein the first pawl end part 20a is shown separate from its corresponding first pawl head 21a. Also the second locking pawl 17 has a second pawl end part 20b shown separate from its corresponding second pawl head 21b. In order to assemble the locking pawls 16,17 in relation to the upper housing legs 35a,35b, so that the pawl end part 20a,20b passes through the upper housing holes 36a,36b, the first pawl end part 20a has a first end plug 16a and the second pawl end part 20b has a second end plug 17a. Opposite the first projection 25a the first lower pawl head part 22a has a first pawl bore 16b that is configured to receive the first end plug 16a, and in this way assemble the first locking pawl 16 around the upper housing leg 35a. Similarly, opposite the second projection 25b the second lower pawl head part 22b has a second pawl bore 17b that is configured to receive the second end plug 17a, and in this way assemble the second locking pawl 17 around the upper housing leg 35b. An end plug 16a,17a may be secured by gluing into a respective pawl bore 16b,17b.

Alternatively a pawl end part and a pawl head may be integral, however by making the pawl end part and the pawl head part as separate parts mounting of the steering column lock may be easier to perform due to the limited space for manipulating the parts of the steering column lock.

The stanchion head 39 fits within the diameter of the steerer tube 3. A hollow stanchion leg 41 that has a circumferential exterior shoulder 42 protrudes axially from the stanchion head 39 towards a free stanchion end 43. The length of the hollow stanchion leg 41 between the shoulder 42 and the free stanchion end 43 delimits a mandrel 44 for holding a second spring 45.

The mandrel 44 and the second spring 45 is accommodated in a lower housing 46, which lower housing 46 is secured to the circumferential wall 3a of the steerer tube 3 by means of securing pins 47a,47b to keep the lower housing 46 in fixed axial position in relation to the steerer tube 3. The lower housing 46 keeps the stanchion leg 41 centered in the steerer tube 3 due to a top plate 48 of the lower housing 46 having a top hole 49 for passage of the stanchion leg 41. The circumferential exterior shoulder 42 rests on said top plate 48. The top plate 48 also enforces the structure of the lower housing 46 radially. The hollow stanchion leg 41 has a bore 50 inside which the USB socket 32 is positioned. A push-button 51 that has a circumferential recess 52 opposite its exterior end 53 holds the USB socket 32 in place inside the bore 50. The recess 52 serves for receiving an O-ring 54 to radially seal between the lower housing 46 and the push-button 51.

The free ends 38a,38b of the upper housing legs 35a,35b are resting on top of a stanchion head 39 of a T-shaped stanchion 40 and is thereby able to also be displaced axially up and down an axial distance corresponding to the height of the oblong upper housing holes 36a,36b when pushing at the push-button 51 and compressing the second spring 45, thus the upper housing, the push-button and the second spring 45 are also components of the least one second displaceable component that is axially displaceable along the length of the steerer tube.

To lock the bike having a steering column lock 1 in accordance with the first not claimed embodiment of the present invention the biker places the steerer tube in any desired turned orientation, pushes at the exterior end 53 of the push-button 51, whereby the stanchion head 39 is displaced upwards thereby lifting the forked upper housing 34 so that the oblong upper housing holes 36a,36b are aligned with the apertures 14 and diametrically opposite lock openings 13a,13b, whereby the compression force of the first spring 18 is relieved and the first pawl end part 20a and the second pawl end part 20b spring apart along the diameter of the steerer tube and into the aligned apertures 14 of the first lock part 10 via diametrically opposite lock openings 13a,13b of said first lock part 10, thus the first lock component assumes the position seen in fig. 5c. The bike's steerer tube 3 is now locked and cannot rotate about its axis in relation to the head tube 4. In said locked position the first pawl end part 20a and the second pawl end part 20b are in the lowest position of the oblong upper housing holes 36a,36b because the upper housing 34 has been moved upwards.

Opposite the free ends 38a,38b of the upper housing legs 35a,35b, said upper housing legs 35a,35b are joined in a socket part 55 that holds the drive shaft 29 of the motor 30 axially aligned with the central shaft hole 28 of the rotating part 19.

In order to unlock the steering column lock 9 the motor 30 is actuated to turn the rotating part 19 about its rotation axis R in the lock cavity 27. The engaging pawl head parts 22a,22b are in seated engagement with the communicating first notch 26a and second notch 26b, thus with the walls of the lock cavity 27. The motor 30 turns the rotating part 19 and thereby forces or allowing the wing parts 19a,19b to move the locking pawls 16,17 towards and away from each other. The wing parts can apply a force against the first upper pawl head part 24a and the second upper pawl head part 24b, or against the first projection 25a and the second projection 25b, or release said force depending on the rotating part 19 rotates clock-wise or counter clockwise. So the pawl head parts 22a,22b move against the compression force of the first spring 18 by the opposite wing parts 19a,19b of said rotating part 19 pushing at the interior surfaces 56a,56b of the opposite notches 26a,26b that at least partly define the lock cavity 27. Since the width of the rotating part 19 is smaller than its length, said rotating part 19 forces the pawl head parts 22a,22b in the direction against each other and sets the first pawl end part 20a and the second pawl end part 20b of the respective locking pawls 16,17 free of the apertures 14 of the lock ring 12 and back towards the oblong upper housing holes 36a,36b, whereby the first spring 18 is compressed again and enters a ready-to-lock position. The push-button is at the same time axially displaced back to the position it had prior to locking the steering column lock, thus into a position in which the push-button is easy accessible manually from the open end 33 of the steerer tube 3 opposite the handlebars (not shown). The steering column lock 9 is not fully and securely unlocked before the spring force applied to the second spring 45 has been relieved to an extent in which the first pawl end part 20a and the second pawl end part 20b are forced into the upmost position of the oblong upper housing holes 36a,36b and the upper housing 34 has returned axially downwards.

The interior surfaces 56a,56b of the projections 25a,25b may be curved and the confronting corresponding faces 57a,57b of the wing parts 19a,19b be complementarily curved, to facilitate a smooth guided turning of the rotating part 19 to push on the notches 26a,26b of the projections 25a,25b.

The electric wires 37a,37b also connects the motor 31 to a Bluetooth enabled printed circuit board 58 in order to remotely facilitate unlocking of the steering column lock 9. In order for a remote device to communicate with the Bluetooth enabled printed circuit board 58 its antenna 59 is located at the open end 33 of the steerer tube 3, e.g. in the vicinity of the USB socket 32. The motor 30 may further be in electric communication with a fingerprint lock (not shown) for the push-button 51 via a Bluetooth enabled printed circuit board to enable the unlocking of the steering column lock in response to recognition of the biker's fingerprint.

Commercially available fingerprint locks and Bluetooth enabled printed circuit boards are available on the market. Their structure and function is within the knowledge of the skilled person and will not be discussed in further details herein.

Smooth turning of the steerer tube 3 inside the head tube 4 is achieved by means of the provision of an upper ball bearing 60 above the steering column lock 9 and a lower ball bearing 61 at the transition of the head tube 4 into the arch member 7.

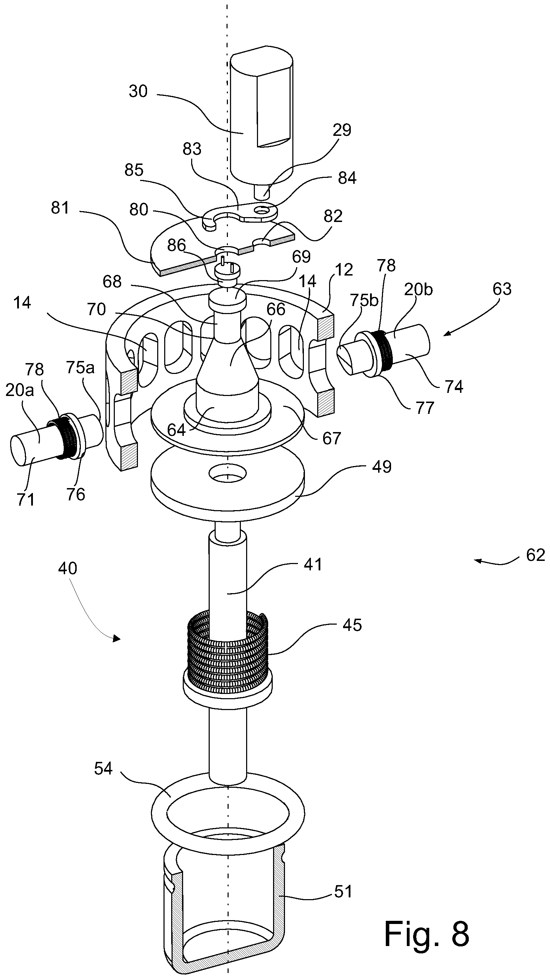

Figs. 8 - 10 show a second not claimed embodiment of a steering column lock 62. The second not claimed embodiment of a steering column lock 62 corresponds substantially to the first not claimed embodiment of a steering column lock 9 both in terms of components and function, and for like parts same reference numerals are used. In Figs. 8 - 10 the second not claimed embodiment of a steering column lock 62 is seen without housings, USB socket, and Bluetooth enabled printed circuit board. Emphasis is made that such components may nevertheless be part of the second not claimed embodiment of a steering column lock 62.

The main difference between the second not claimed embodiment of a steering column lock 62 and the first not claimed embodiment of a steering column lock 9 is the configuration of the first lock component 63.

Instead of a rotating part the first lock component 63, which is seen in exploded view in fig. 8, comprises a cone-shaped member 64 that is axially displaceable by means of a co-operating push-button 51 and a stanchion 65, which are operated to move up and down inside the steerer tube 3 against a spring force from the second spring 45 on the stanchion leg 66 in the same manner as described for the first not claimed embodiment of a steering column lock 9. This cone-shaped member 64, the co-operating push-button 51, and the stanchion 65 are components of the at least one second displaceable component that are axially displaceable along the length of the steerer tube 3.

The cone-shaped member 64 has a cone part 66 that has a cone body 67, which is arranged axially aligned on top of the stanchion head 39. Opposite the cone base 67 the cone body 66 has a cone neck 68 with a cone head 69. The cone neck 68 and cone body 67 may taper towards each other at the cone junction 70.

The first lock component 63 further a first locking pawl 71 that has a first pawl end part 72a opposite a first pawl head 73a, and a second locking pawl 74 that has a second pawl end part 72b opposite a second pawl head 73b.

In contrast to the first not claimed embodiment of locking pawls 16,17, the second not claimed embodiment of first and second locking pawls 71,74 does not have enlarged pawl heads, but tubular pawl heads 73a,73b having a respective first bias-cut push end 75a and a second bias-cut push end 75b. The bias-cut push ends 75a, 75b extend via respective first and second pawl collars 76,77 into corresponding respective first and second pawl end parts 20a,20b that serve to engage the apertures 14 of the lock ring 12 and the lock openings 13a,13b of the steerer tube, in a similar manner as for the first not claimed embodiment of a steering column lock. The first and second locking pawls 71,74 constitute at least one first displaceable component that is displaceable along the diameter of the steerer tube 3.

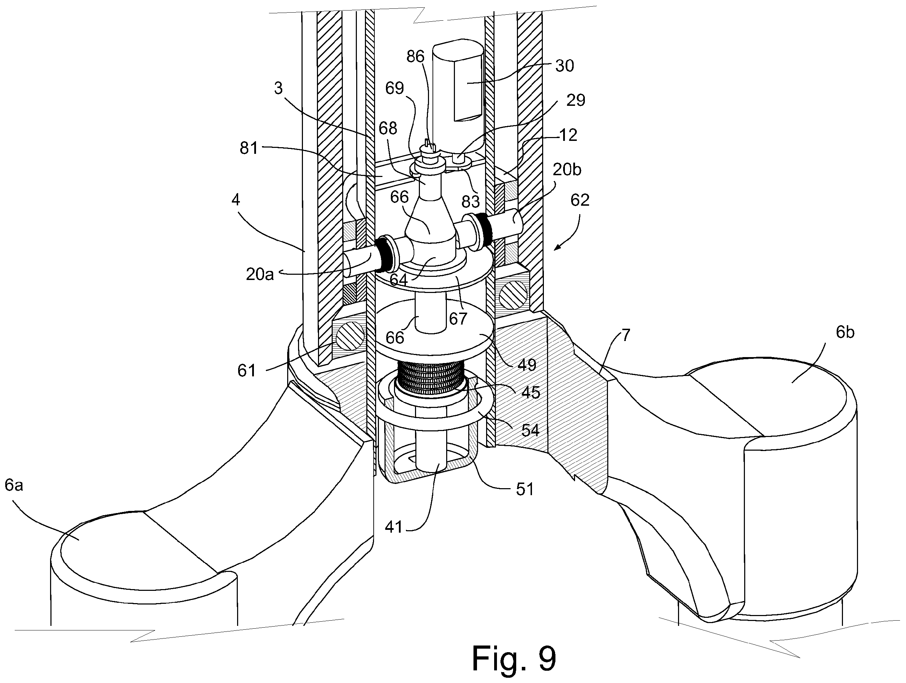

The first and second pawl end part 20a,20b has third springs 78 mounted thereon facing the first and second pawl collars 76,77 and being compressed against the interior wall 79 of the steerer tube 3 or an upper housing (not shown) when the cone-shaped member 64 is moved upwards, thereby moving the first and second locking pawls 71,74 apart due to the increasing diameter of the cone part 66 entering between the respective first bias-cut push end 75a and second bias-cut push end 75b. The bias-cuts may have angles corresponding to the cone angle, but deviations therefrom are possible. The first and second pawl end parts 20a,20b are pushed into opposite apertures 14 and lock openings 13a,13b thereby locking the steerer tube 3 into its anti-rotational position, as seen in fig. 9, to assume a locked state of the steering column lock 62.

Which of the annular spaced apart apertures that the first and second pawl end part 20a,20b are pushed into depend on the angle of rotation of the steerer tube 3 that the biker has placed the steerer tube 3 in, in relation to the head tube 4.

The steerer tube 3 has a suspension means for the electric motor 30. The suspension means is a disk member 81, comprising a lower disk 81a and an upper disk 81b. The disk member 81 is inserted and secured inside the steerer tube 3 above the first lock component 15' below the cone head 69. The lower disk 81a has an off-center shaft hole 82 for receiving a drive shaft 29 of the electric motor 30. A catch hook 83 has a hook hole 84 axially aligned with the off-center shaft hole 82 to arrange the catch hook 83 to rotate along with the drive shaft 29 when the drive shaft 29 is rotated by the electric motor 30. When the cone head 69 of the cone-shaped member 64 is pushed through a head hole 80 of the lower disk 81a it contacts a press-button switch 86 that starts the electric motor 3, whereby the hook 85 of the catch hook 83 catches below the cone head 69 and holds the cone head 69 on top of the lower disk 81a. The upper disk 81b, which is not seen in fig. 8, supports the electric motor 30 in upright position.

As for the first not claimed embodiment of a steering column lock 9, in order to unlock the second not claimed embodiment of a steering column lock 62 the first and second pawl end parts 20a,20b must be moved at least out of the apertures 14 and free of the head tube 4, e.g. by being retracted inside the lock openings 13a,13b again. This is done by reversing the rotation of the catch hook 83, thereby setting the cone head 69 free and relieving the compression force of the second spring 45 and of the third springs 78. So the third springs 89 are compressed when the steering column lock 62 is locked, whereas the first spring 18 is compressed when the steering column lock is unlocked.

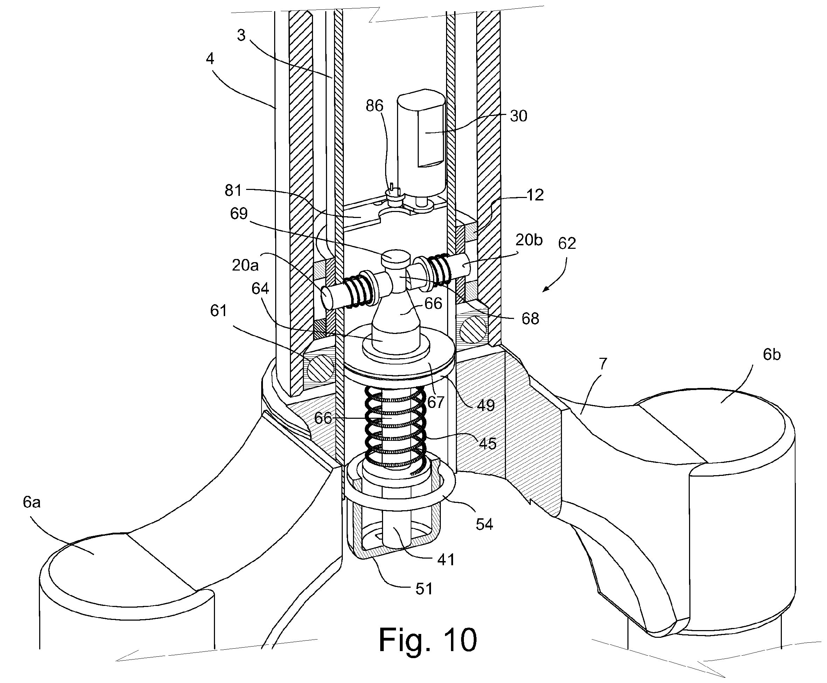

This reversing of rotation of the electric motor 30 and catch hook 83 fixed thereto is seen in fig. 10, and can be done proactively by reversing the direction of the rotation of the drive shaft 9 of the electric motor 30, e.g. initiated by a Bluetooth signal from e.g. a mobile phone or by an electronic key to a Bluetooth enabled printed circuit board.

Other kinds of wireless technology may be used instead of Bluetooth.

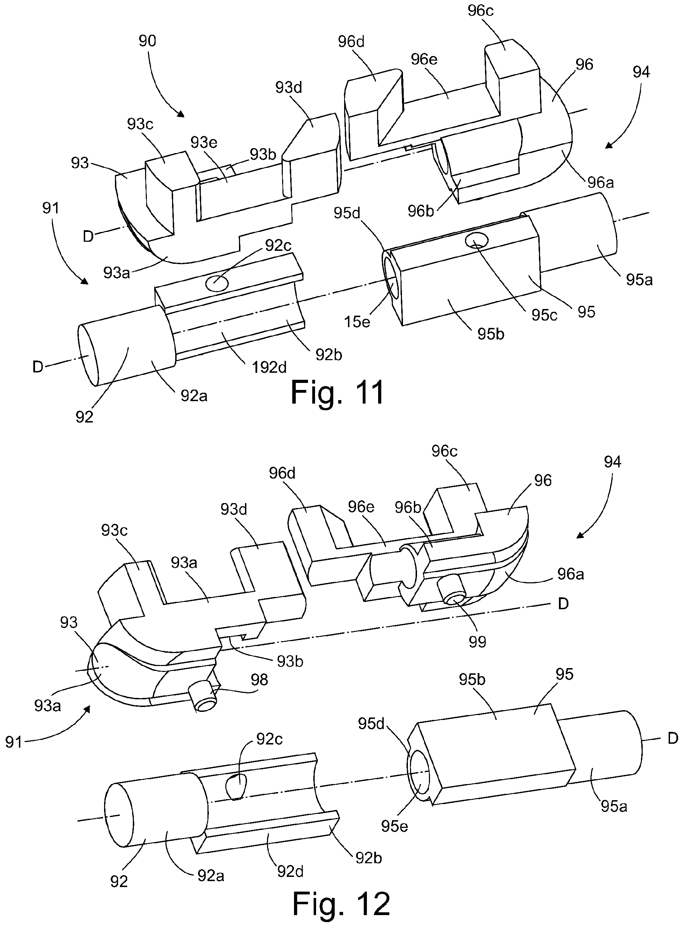

Figs. 11, 12 and 13 show a modified first lock component 90 for the first not claimed embodiment of a steering column lock 62.

The modified first lock component 90 differs from the first and second not claimed embodiments of a first lock component 15,15', including in the design of the first and second pawl end parts, which are not entirely identical, however as for the first lock component 15, the modified first lock component 90 is made up of a separate locking pawl head and a separate pawl end part that are to be assembled when the steering column lock is mounted inside the front fork.

The first locking pawl 91 has a first pawl end part 92 and a first pawl head 93. The second locking pawl 94 has a second pawl end part 95 and a second pawl head 96.

The first pawl head 93 has a first lower pawl head part 93a, which has a first seat 93b, and a first upper pawl head part 93c, which has a first projection 93d extending along and offset the pawl axis D from the first lower pawl head part 93a, which first projection 93d has a first notch 93e. The first seat 93b and the first projection 93d extend in parallel as opposite axial half parts of the first pawl head 93.

The second pawl head 96 has a second lower pawl head part 96a, which has a second seat 96b, and a second upper pawl head part 96c, which has a second projection 96d extending along the pawl axis D from the second lower pawl head part 96a, which second projection 96d has a second notch 96e. The second seat 96b and the second projection 96d extend in parallel as opposite axial half parts of the second pawl head 96.

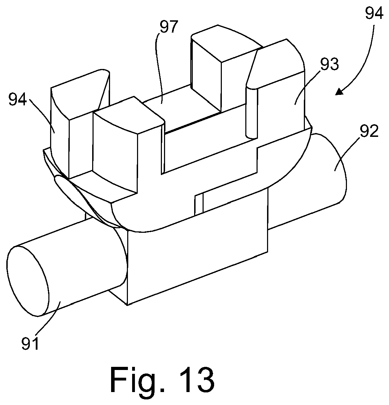

Due to the seats 93b,96b and the projections 93d,96d being axial opposite half parts on opposite sides of the pawl axis D, as seen best in figs. 11 and 12, the first lower pawl head part 93a is configured to mate into the second seat 96b, and the second lower pawl head part 96a is configured to mate into the first seat 93b, to thereby arrange the first notch 93e and the second notch 96e in communication with each other to define a lock cavity 97, as seen in fig. 13, for accommodating and engaging the rotating part 19, in the same manner as described for the first not claimed embodiment of a first lock component 15.

The first lower pawl head part 93a has a downwards protruding first dowel 98 and the second lower pawl head part 96a has a downwards protruding second dowel 99, which dowels 98,99 serve for securing of the pawl heads 93,99 to the respective pawl end parts 92,95.

The first pawl end part 92 has a first free end part 92a and an opposite first head engaging part 92b to be situated below and secured to the first lower pawl head part 93a in the assembled state of the first lock component 90. The first head engaging part 92b has a first traverse hole 92c that receives the first dowel 98 when the first locking pawl 91 is assembled inside the front fork.

The second pawl end part 95 has a second free end part 95a and an opposite second head engaging part 95b to be situated below and secured to the second lower pawl head part 96a in the assembled state of the first lock component 90. The second head engaging part 95b has a second traverse hole 95c that receives the second dowel 99 when the second locking pawl 94 is assembled inside the front fork to obtain the steering column lock

The first head engaging part 92b has a lengthwise extending concave track 92d that faces towards and receives a complementarily shaped lengthwise extending convex part 95d of the second head engaging part 95b of the second pawl end part 95.

In the assembled functional state of the first lock component 90 the concave track 92d and the convex part 95d extend lengthwise in parallel, but axially offset in relation to the first pawl end part 92 and second pawl end part 95, whereby the first head engaging part 92b and the second head engaging part 95b constitute the at least one first displaceable component that is displaceable along the diameter of the steerer tube 3 and can be moved in a parallel mating arrangement next to each other without taking up extra space, as seen in fig. 13 of the unlocked first lock component 90, and described in relation thereto.

The pawl heads 93,96 are spring-biased in the same manner as described for the first not claimed embodiment of a first lock component 15. To that aspect the convex part 95d has a bore 95e for receiving the first spring (not shown).

Due to the dowels 98,99 being secured in traverse holes 92c,95c the pawl end parts 92,95 are firmly secured to the respective pawl heads 93,96, in the mounted state of the steering column lock of the present invention. The joint obtained by the engagement of the dowels 98,99 and the traverse holes 92c,95c do not easily break apart even when subjected to heavy forces and loads when the second lock part is moved in and out of engagement with the first lock part.

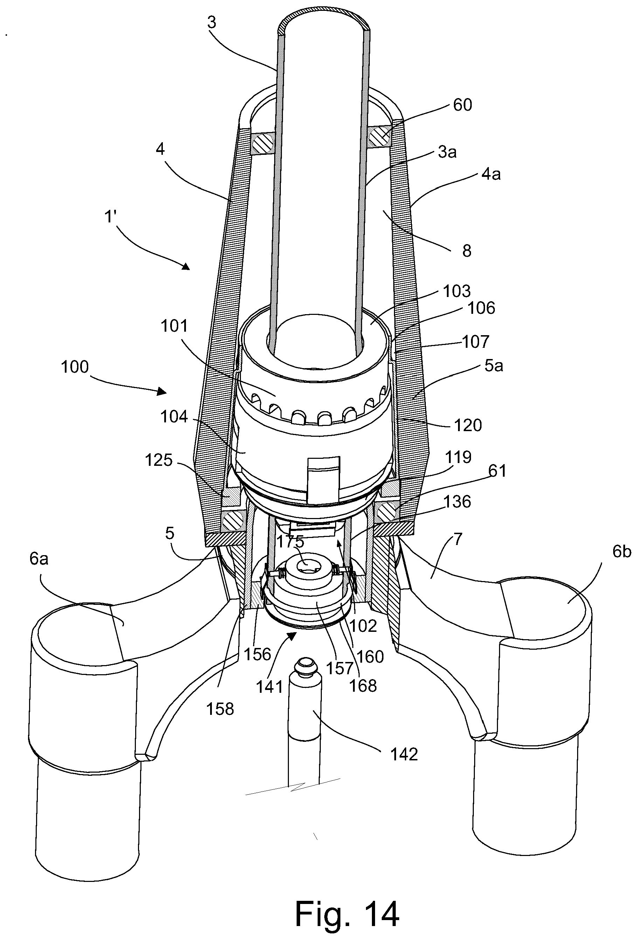

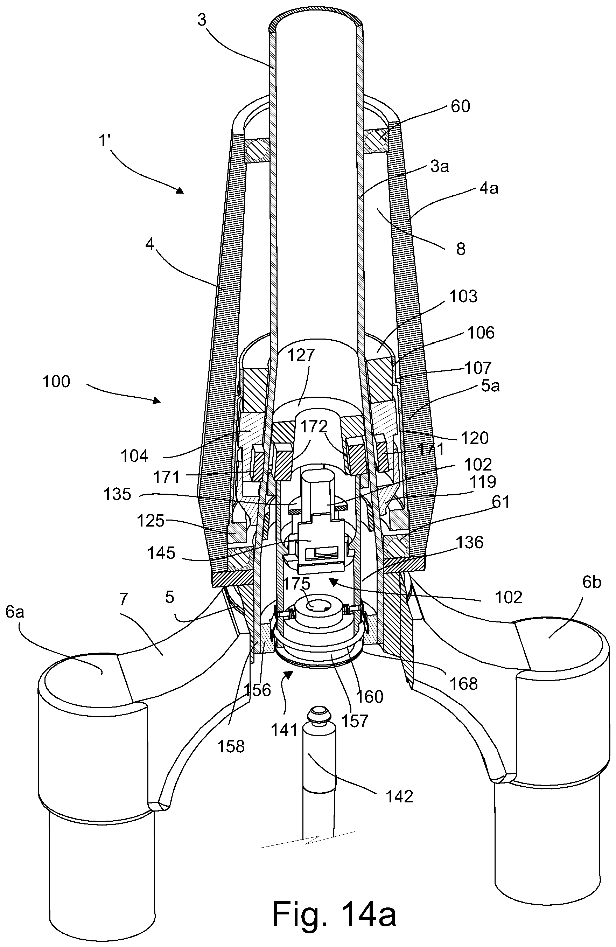

Figs. 14 and 14a show a front fork 1' provided with a third embodiment of a steering column lock 100, which is seen in locked state. The third embodiment of a steering column lock 100 has wirings, battery, and USB-socket just as the first and second not claimed embodiments of steering column locks 9;62 and as the modified first not claimed embodiment, as described above, as well as means for starting and stopping the electric motor 30, however these components and means are not shown in the following figures purely for practical purposes to better visualize the co-operating functional features, components and arrangement of the first lock part 101 and the second lock part 102. For same features and components same reference numbers are used.

In fig. 14 the steering column lock 100 is used on an E-bike that has a head tube 4 that tapers towards the handlebars (not shown). The head tube 4 has a widest interior diameter towards the arch member 7 to make plenty of space for a first lock part 101 in the radial space 8 between the head tube 4 and the steerer tube 3.

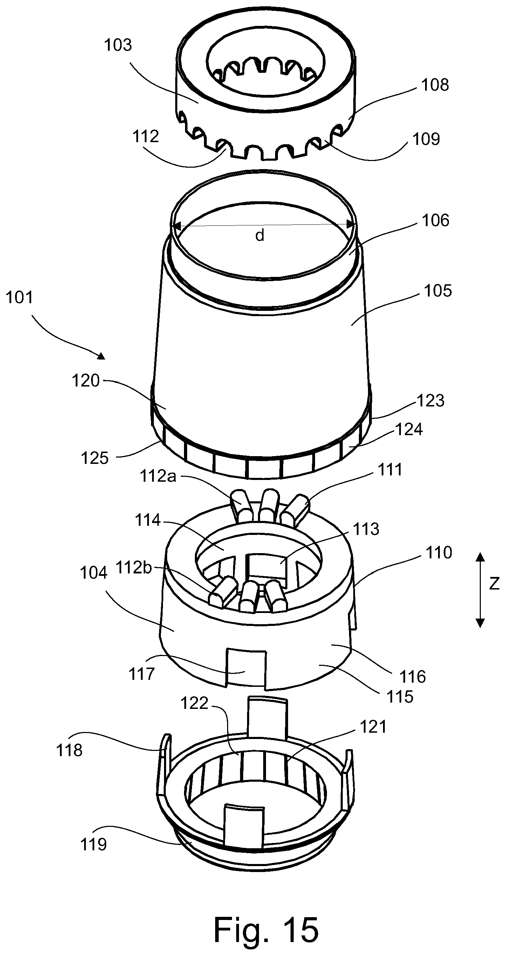

The individual main components of the first lock part 101 is seen better in the perspective exploded view of fig. 15.

The first lock part 101 of the first lock means of the steering column lock 100 has of a first ring-shaped lock part 103 and a second ring-shaped lock part 104 arranged in a tubular casing 105 of non-magnetic material. The diameters of one or more of the first ring-shaped lock part 103, the second ring-shaped lock part 104 and the tubular casing 105 reduce axially from the front fork towards the handlebars (not shown), thus at least the second ring-shaped lock part 104 and the tubular casing 105 are substantially frustum-conical to fit complementarily inside the head tube 4 in the radial space 8 to the steerer tube 3. The top part 106 of the tubular casing 105 has a further reduced exterior diameter d that leaves a clearance 107 between the tubular casing 105 and the interior face of the wall of the head tube 4. The clearance 107 may be less than 1 mm, such a 0.4 mm. The first ring-shaped lock part 103 is secured inside the top part 106 of the tubular casing 105, e.g. by means of glue, and cannot displace axially because the tubular casing 105 is secured to an interior face of the head tube, e.g. by means of glue.

The lower first circumferential edge part 108 of the first ring-shaped lock part 103 has a plurality of annularly spaced apart, axially protruding, first teeth 109 that serve as the first engagement means. The upper second circumferential edge part 110 has at least one axially protruding second tooth 111 configured to engage a complementary space 112 between adjacent first teeth 109. In the exemplary embodiment shown in figs. 14 and 15 the at least one axially protruding second tooth 111 is provided as two diametrical opposite sets 112a,112b of three second teeth 111.

The second ring-shaped lock part 104 has a plurality, such as e.g. eight, annularly spaced apart interior cavities 113 provided in an interior annular surface 114 for mounting, e.g. by means of glue, a corresponding number, optionally less than the corresponding number, of first magnets 171.

The second ring-shaped lock part 104 is arranged in the tubular casing 105 to be axially displaceable towards and away from the first ring-shaped lock part, as indicated by arrow Z, with a locking length adjusted to allow the first teeth 109 and the second teach 111 engage in locked state of the steering column lock 100 and disengage in the un-locked state of the steering column lock 100. This locking length may e.g. be about 5 mm.

The exterior annular surface 115 of the lower second circumferential edge part 116 of the second ring-shaped lock part 104 has a plurality of annularly spaced apart axially extending slide grooves 117 configured for accommodating a corresponding plurality of axially protruding slide legs 118 of a lower lock ring 119 arranged below the second ring-shaped lock part 104 inside the tubular casing 105. The second ring-shaped lock part 104 is in axially sliding engagement with the lower lock ring 119 due to the slide legs 118 being adapted to slide in the slide grooves 117 of said second ring-shaped lock part 104 when said second ring-shaped lock part 104 undergoes an axial displacement. Such axial displacement has a travel length shorter than a travel length at which the lower lock ring 119 and the second ring-shaped lock part 110 disengage.

The lower lock ring 119 is secured to the steerer tube 3 at a bottom part 120 of the tubular casing 105 to serve as a means to prevent rotation of the second ring-shaped lock part 110 in relation to the steerer tube 3, but in control of the travel length of the aforementioned axial displacement of the second ring-shaped lock part 110 inside the tubular casing 105.

An annular interior face 121 of the lower lock ring 119 has first knurlings 122 that further serve to prevent said lower lock ring 119 from rotating about the steerer tube 3. The bottom part 120 of the tubular casing 105 has a ring-shaped extension part 123, optionally of steel to add weight to the tubular casing 105, which ring-shaped extension part 123 has an annular exterior face 124 having second knurlings 125 that further serve to prevent said tubular casing 105 from rotating about the steerer tube 3.

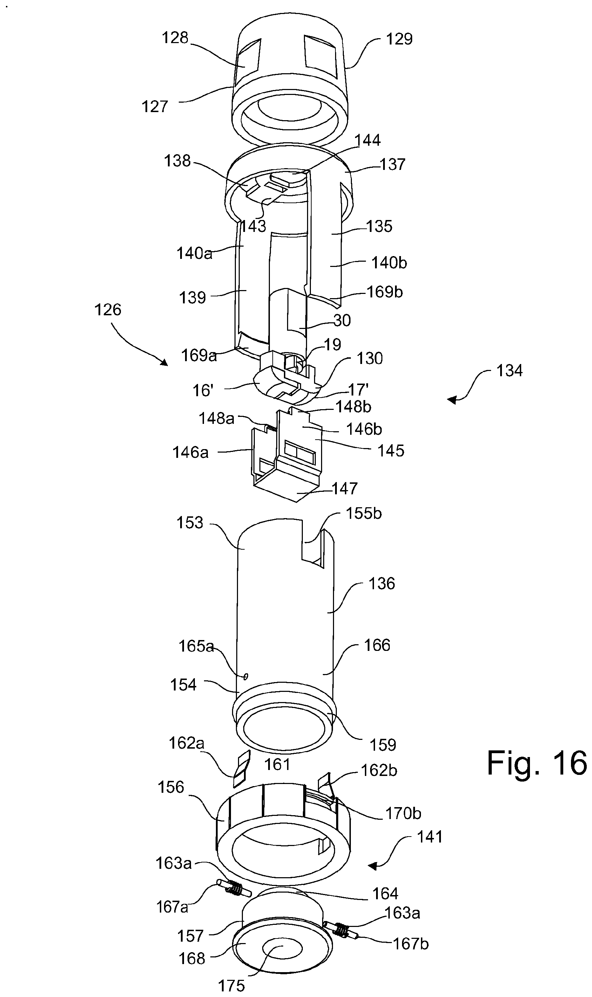

Fig. 16 is a perspective exploded view of an embodiment of a second lock part 126 for the third embodiment of a steering column lock 100.

The second lock part 126 has a hollow interior lock part 127 to be mounted about the steerer tube 3 in axial displaceable relationship. The interior lock part 127 has an exterior annular surface 128 provided with a plurality of annularly spaced apart recesses 129 that accommodate a plurality of second magnets 172 that is/are in magnetic contact with the first magnets 171 of the second ring-shaped lock part 110 to move said second ring-shaped lock part 110 simultaneously with the interior lock part 127 along the axis of the steerer tube 3.

The second lock part 126 further has a first lock component 130 substantially similar to the first lock component 15 for the first not claimed embodiment of a steering column lock 9, and for like parts same reference numerals are used. The first lock component 130 has a first locking pawl 16' and a second locking pawl 17', which locking pawls 16',17' differ from the respective first locking pawl 16 and second locking pawl 17 of the first not claimed embodiment of a first lock component 15 in not having long protruding pawl end parts, nor are such pawl end parts needed because no locking holes are made in the steerer tube 3 for passage of those. The engagement of the first lock part 101 and the second lock part 126 of the third embodiment of a steering column lock 100 rely on the magnetic attraction of the first magnets 171 and second magnets 172 provided on respective first and second lock parts 101;126 as respective engagement means.

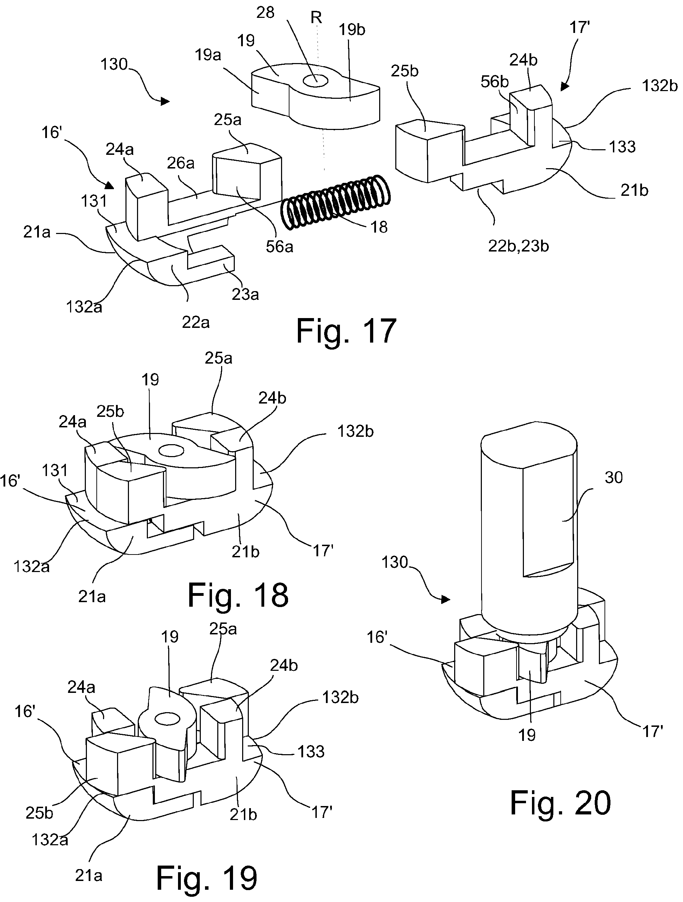

As seen best in figs. 17 - 19 the first pawl head 21a has a first upper pawl head part 24a being retracted from a free first pawl edge 132a thereby exposing a first shoulder 131. The second pawl head 21b has a second upper pawl head part 24b being retracted from a free second pawl edge 132b thereby exposing a second shoulder 133. For this third embodiment of a first lock component 130 the respective pawl end parts of the first lock component 130 are the respective free shoulders 131,133.

Fig. 20 is a perspective side view of the first lock component 130 equipped with an electric motor 30. The drive shaft 29 of the electric motor 30 is received in the central shaft hole 28 of the rotating part 19 in similar manner as for the previously described embodiments. In Fig. 20 the rotating part 19 is in the same position as shown in fig. 19.

As shown in fig. 16 the second lock means of the second lock part 126 further comprises a housing assembly 134 in which the first lock component 130 is situated. The housing assembly 134 comprises at least an upper housing 135 and a lower second displaceable component in form of an interior tubular housing 136.

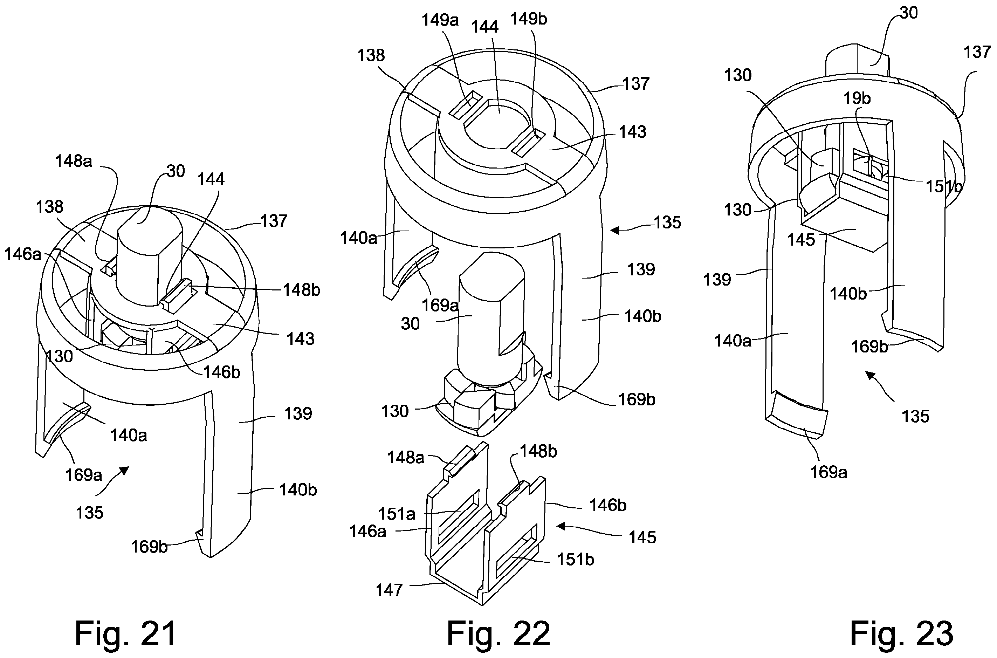

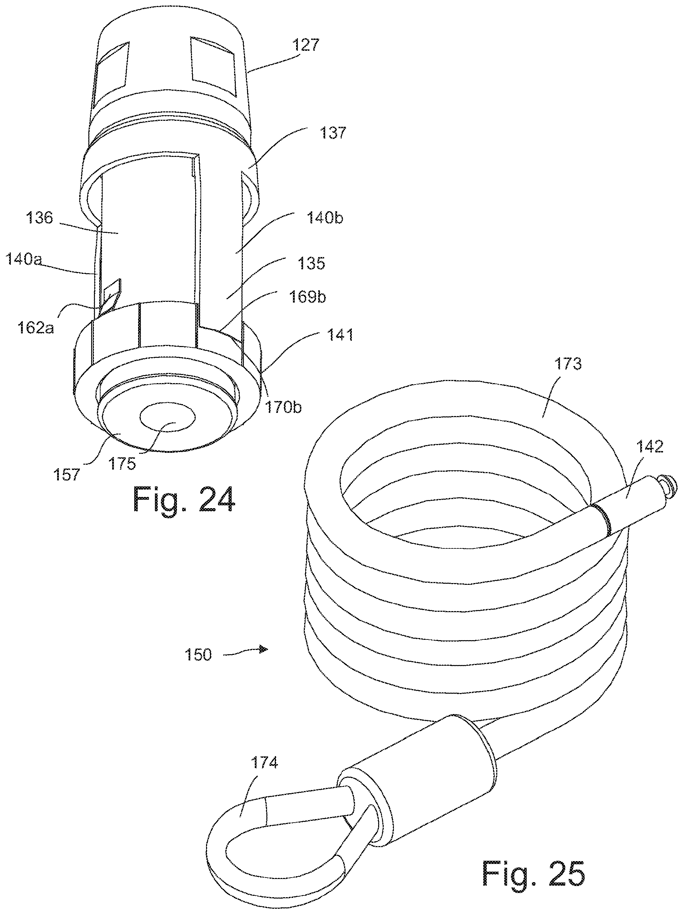

As seen best in the enlarged scale views of figs. 21 - 23 and in e.g. fig. 16 the upper housing 135 has a top part 137 with a socket part 138 that extends into a forked lower part 139 having opposite upper housing legs 140a,140b configured to engage or otherwise connect to a female cable lock part 141 of a first not claimed embodiment of a cable lock coupling means, as seen in e.g. figs. 16 and 24.

Fig. 24 shows the second lock part 126 in assembled state, wherein the female cable lock part 141 is seen arranged to receive a male cable lock part 142 of e.g. the cable lock 150 illustrated in fig. 25. The engagement between the upper housing legs 140a,140b and the female cable lock part 141, holds said female cable lock part 141 together with the other components of the second lock part 126 thereby preventing said female cable lock part 141 from dropping out of or be torn out of the steerer tube 3 when the cable lock 150 is operated, while on the other hand allowing the interior tubular housing 136 reciprocate axially, as will be described further below.

The socket part 138 spans the top part 137 as a bridge part 143 having a central oblong socket hole 144 through which the main body of the electric motor 30 passes and mates in anti-rotational relationship. As the main body of the electric motor 30 and the oblong socket hole 144 have substantially same cross-sections the main body of the electric motor 30 cannot rotate inside the socket hole 144 and stays in fixed position in said socket hole 144 while the drive shaft 29 rotates the rotating part 19 to move the first locking pawl 16' and the second locking pawl 17' along the diameter of the steerer tube 3.

The second lock part 126 has a holder 145 adapted to couple to the socket part 138 of the top part 137 of the upper housing 135 between the opposite upper housing legs 140a,140b. The holder 145 is substantially U-shaped having opposite holder legs 146a,146b joined by a bottom holder leg 147 upon which the first lock component 126 may rest to be supported from below in order not to drop off its operative connection to the electric motor 30. At least the bottom holder leg 147 may serve as a sufficient back-stop to avoid that the first lock component 126 unintentionally displaces axially in relation to the upper housing 135, e.g. in response to vibrations of the bicycle or of the E-bike, such as when the steering column lock 100 is operated or when the bicycle or E-bike runs.

The opposite holder legs 146a,146b have free ends with respective holder hooks 148a,148b that can hook into corresponding hook holes 149a,149b of the bridge part 143 of the socket part 138. The opposite holder legs 146a,146b also have respective slots 151a,151b that allow the engagement wings parts 19a,19b to pass, as seen in fig. 23, when the rotating part 19 rotates to move the opposite locking pawls 16',17' along the diameter of the steerer tube 3, thus to move said locking pawls 16',17' towards and away from each other along the diameter of the steerer tube 3 when the steering column lock 100 is to be arranged in the locked position and in the unlocked position.

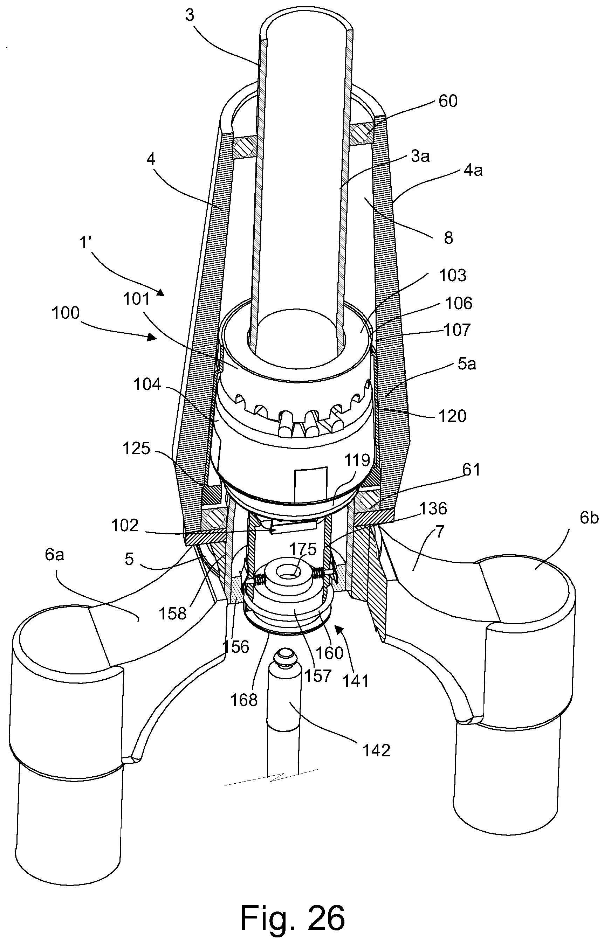

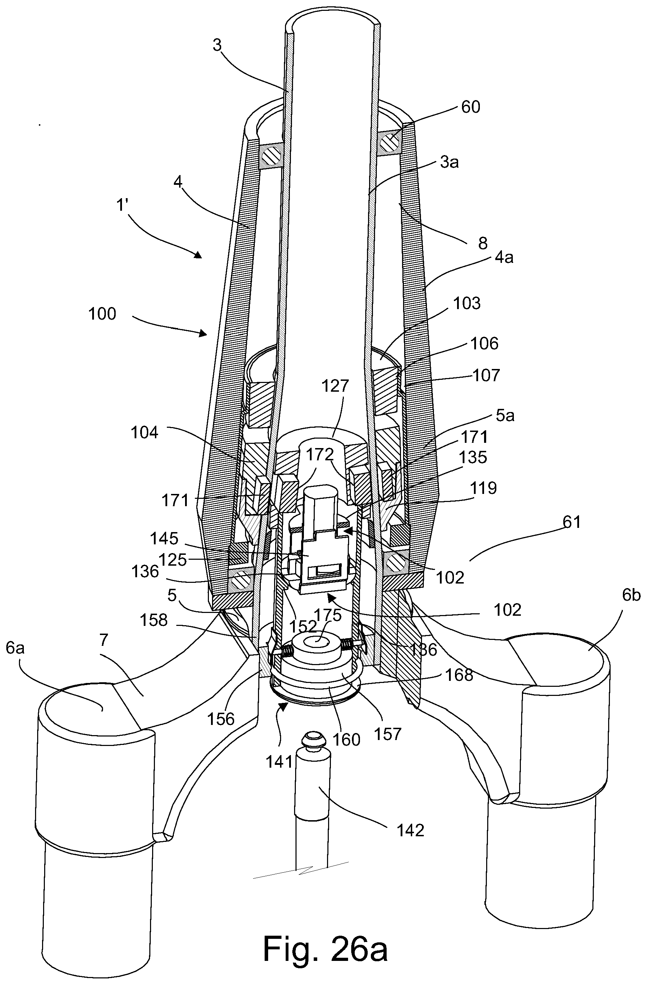

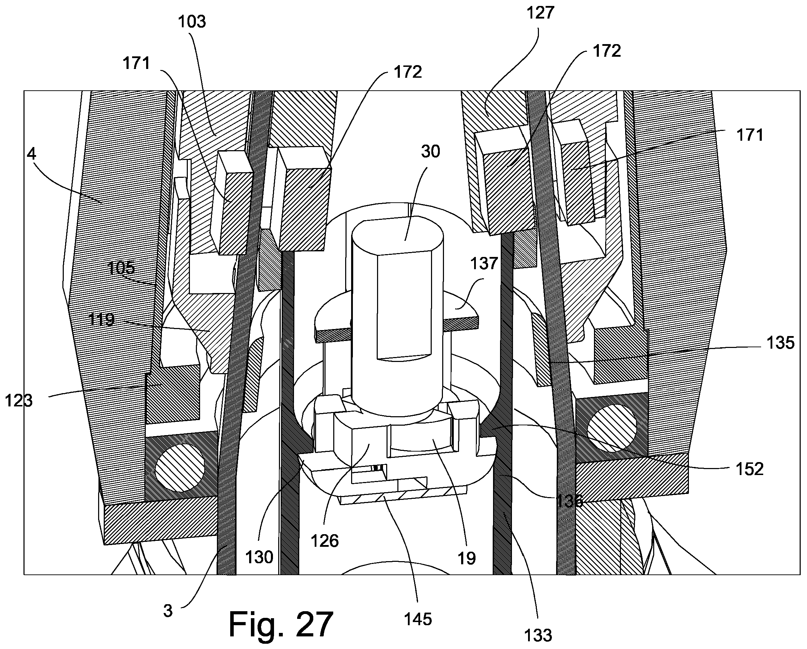

The interior tubular housing 136 has a breast means 152 protruding towards the central axis of the steerer tube 3 and being configured to engage below the shoulders 130,132 of the first lock component 126 when the interior tubular housing 136 is axially displaced downwards so that said breast means 152 engages below the opposite shoulders 131,132 of said first lock component 126. The breast means 152 are visible in figs. 26a and 27, which figures also show the position of the first lock component 126 above and below the breast means 152 in the unlocked and locked positions, respectively.

The interior tubular housing 136 has a tubular upper housing part 153 above the breast means 152 and an opposite tubular lower housing part 154 below the breast means 152, which tubular upper housing part 153 has coupling recesses 155a,155b that axially and slidingly engage the bridge part 143 of the socket part 138 of the upper housing 135 when the interior tubular housing 136 reciprocates during its axial displacement along the axis of the steerer tube 3, but also to prevent the interior tubular housing 136 from rotating in relation to said upper housing 135 and said steerer tube 3.

The female cable lock part 141 comprises a cable lock ring 156 and a cable lock housing 157. The cable lock ring 156 is secured to the interior wall surface of a free end 158 of the steerer tube 3 and surrounds an annular recessed rim part 159 of the tubular lower housing part 154 of the interior tubular housing 136. An O-ring 160, which is interposed between the annular recessed rim part 159 of the tubular lower housing part 154 and the cable lock ring 156, to prevent access of dirt and moisture into the steering column lock 100.

The cable lock ring 156 has exterior third knurlings 161 to further prevent the cable lock ring 156 from rotating about the steerer tube 3, whereto said cable lock ring 156 may be further secured by other securing means, e.g. by means of glue.

The cable lock ring 156 is interconnected with the cable lock housing 157 via assembling means. The assembling means comprises plate springs 162a,162b on the cable lock ring 156, which plate springs 162a,162b protrude upright from the cable lock ring 156, and diametrically opposite spring-biased first lock pins 163a,163b on the cable lock housing 157, which spring-biased first lock pins 163a,163b protrude radially from a top cable lock housing part 164 of cable lock housing 157. In the assembled state of the female cable lock part 141 opposite spring-biased first lock pins 163a,163b extend through opposite pin holes 165a,165b in the circumferential wall 166 of the interior tubular housing 136 so that the free ends 167a,167b of the first lock pins 163a,163b apply a force on the opposite plate springs 152a,162b.

The cable lock housing 157 has a bottom push plate 168 that engages below or is secured to a free end of the tubular lower housing part 154 of the interior tubular housing 136. The bottom push plate 168 serve as a push-button that can push on the cable lock housing 157 and the interior tubular housing 136 when being pushed upwards inside the steerer tube 3 thereby actuating the locking of the steering column lock 100. Thus both the interior tubular housing 136 and the cable lock housing 157 are second displaceable components that are axially displaceable along the length of the steerer tube 3.

The cable lock ring 156 further has first coupling means for coupling with second coupling means at the free ends of the upper housing legs 140a,140b to ensure the engagement between the upper housing legs 140a,140b and the female cable lock part 141, so that the components of the second lock part do not fall apart. Preferably the second coupling means may be first snap-coupling hooks 169a,169b that snaps with complementary second snap-coupling hooks or snap coupling recesses 170a,170b at or in the wall of the cable lock ring 156.

The cable lock 150 seen in fig. 25 has a male cable lock part 142 at a free end of a cable 173 and a loop 174 at the opposite end of the cable 173. The cable 173 has sufficient length to pass e.g. through the front wheel of a bicycle or E-bike and reach back to the steering column lock 100 and arrange the male cable lock part 142 through the loop 174 and then snap said male cable lock part 142 into a plug hole 175 of the cable lock housing 157 of the female cable lock part 141.

Fig. 26 is a view similar to the view of fig. 14 but wherein the third embodiment of the steering column lock 100 is in unlocked state and the shoulders 131,133 of the first lock component 130 are above the breast means 162 and the interior tubular housing 136 is in its lower position wherein it does not move the opposite first and second magnets 171,172 by pushing at the interior lock part 127 to displace said interior lock part 127 and second ring-shaped lock part 104 in common to the locked position seen in figs. 14, 14a and 27.

The preferred magnets are neodymium magnets, e.g. NdFeB magnets that holds approx. 2.2 kg. Weaker or stronger magnets can also be used depending on the weight of the components of the steering column lock and the need for the first magnet and the second magnet to be in sufficient magnetic contact without being in direct mechanical contact.

The locking length that the interior tubular housing 136 can travel to make the first ring-shaped lock part 103 and the second ring-shaped lock part 104 engage to lock the steering column lock 100 may be as little as 5 mm. This locking length also suffices for the first ring-shaped lock part 103 and the second ring-shaped lock part 104 not to accidentally snap together when riding the bicycle or E-bike, or in response to vibrations and bumps.

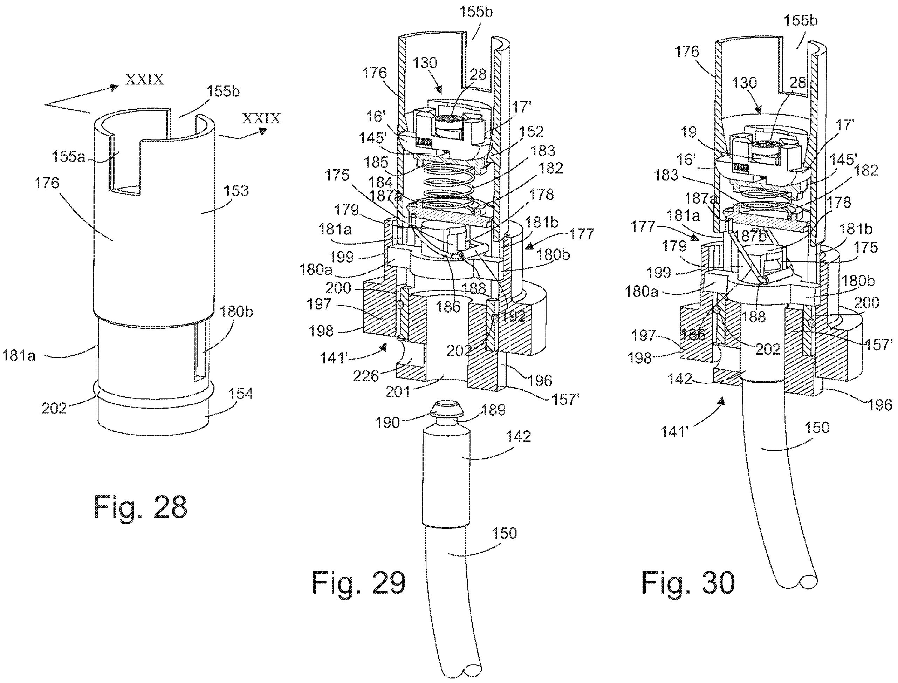

Fig. 28 shows a modified interior tubular housing 176 configured to operate a second not claimed embodiment of a cable lock coupling means 177. The second not claimed embodiment of a cable lock coupling means 177 is shown for use with the third embodiment of a steering column lock 100 and for like part same reference numerals are used.

The second not claimed embodiment of a cable lock coupling means 177 is configured to prevent accidental locking of the cable lock coupling means, and to easily allow the cable lock part 142 to be placed in the modified female cable lock part 141'.

To that aspect the second not claimed embodiment of a cable lock coupling means 177 has a modified female cable lock part 141' comprising a traverse lock body 178. The traverse lock body 178 comprises an upper tubular cable housing 179 with diametrically opposite cross bar arms 180a,180b and a plug hole 175. The tubular lower housing part 154 of the modified interior tubular housing 176 has opposite first slide tracks 181a,181b, for receiving the cross bar arms 180a,180b when the modified interior tubular housing 176 reciprocates, e.g. to allow reciprocation to lock and unlock the third embodiment of a steering column lock 100.

Fig. 29 shows the upper position of the cross bar arms 180a,180b inside said respective opposite first slide tracks 181a,181b, in which upper position said cable lock coupling means 177 is in an open configuration and accessible for inserting the cable lock part 142 to achieve the locked position seen in fig. 30 of said cable lock coupling means 177. In the locked position seen in fig. 30 the cable lock part 142 engages inside the upper tubular cable housing 179.

The modified female cable lock part 141' has a cover part 182 fixed to the tubular upper housing part 153 axially above the opposite first slide tracks 181a,181b to move axially along together with said modified interior tubular housing 176 in relation to the traverse lock body 178. The traverse lock body 178 has an upper spring seat 184 and a modified holder 145' has a lower spring seat 185 between which spring seats 184;185 a fourth spring 183 is axially confined to be arranged in a substantially relaxed condition when the modified interior tubular housing 176 is in the lower position and being compressed compared to the relaxed condition in the direction towards the first lock component 130, thus when the modified interior tubular housing 176 is in the upper position.

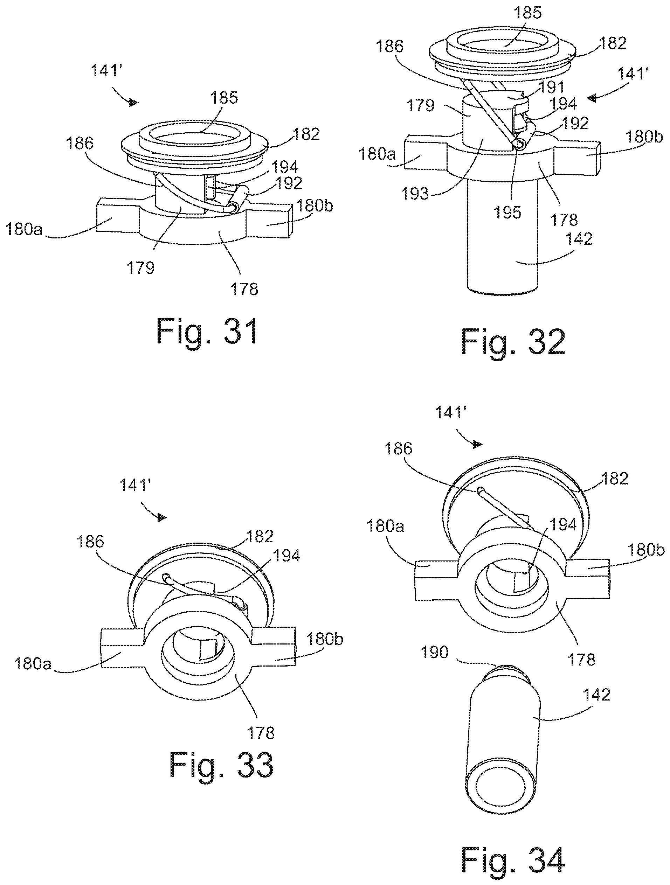

The modified female cable lock part 141' further has a U-bend fifth spring 186 having free ends 187a,187b secured to a chord of the circumference of the cover part 182. The U-bend fifth spring 186 extends inclined and axially downwards below said cover part 182 so that the bottom leg 188 of the U-bend fifth spring 186 can engage a locking recess 189 of a tip part 190 of the cable lock part 142 in the upper position of the modified interior tubular housing 176 when said tip part is inserted into the upper tubular cable housing 179, as seen in figs. 30, 32 and 34. Said U-bend fifth spring 186 is inherently displaced radially away from said chord when the cover part 182 is forced against the first lock component, whereby the fifth spring 186 is placed under a spring force. In the lower position of the traverse lock body 178 the tip part 190 of the cable lock part 142 is allowed to be released, as seen in figs. 29, 31 and 33. The upper tubular cable housing 179 has a blind end part 191, as seen best in fig. 32, that serves as a stop for the inserted tip part 189 of the cable lock part 142 in the upper position, as seen in fig. 30. The bottom leg 188 of the U-bend fifth spring 186 has a protective sleeve 192 that serves to enforce and improve the engagement between said sleeved bottom leg 188 and the locking recess 189, and to protect the bottom leg 188.

The circumferential wall 193 of the upper tubular cable housing 179 has been partially resected axially to delimit an axially extending engagement opening 194 that facilitates achieving the engaging position between the inserted tip part 190 and the bottom leg 188, as seen best in e.g. figs. 30 and 32. The bottom leg 188 is being held in the locking recess 189 pressed by the spring force of the fifth spring 186 against the wall segment 195 that delimits the engagement opening 194.

For the modified female cable lock part 141' a modified cable lock housing 157' has a lower circumferential lock collar 196a in extension of and below a tubular top house part 196b that engages below or is secured to a free end of the tubular lower housing part 154 of the modified interior tubular housing 176. The modified cable lock housing 157' serves as a push-button, that, when actuated, makes the modified interior tubular housing 176 to move axially due to being secured thereto.

A lock bushing 197 has a lower bushing collar part 198, a tubular upper bushing part 199, and delimits a bushing bore 200 that circumferentially accommodates the modified cable lock housing 157', the tubular lower housing part 154, and the traverse lock body 178.

The lower bushing collar part 198 is secured to the interior wall surface of a free end 158 of the steerer tube 3. Both the modified interior tubular housing 176 and the modified cable lock housing 157' are second displaceable components that are axially displaceable along the length of the steerer tube 3. Thus the modified interior tubular housing 176 is arranged to reciprocate in the bushing bore 200 in relation to the lock bushing 197 when the cable lock part 142 is to be locked together with, and released from, the modified female cable lock part 141' by being passed through a cable lock bore 201 of the modified cable lock housing 157' into the upper tubular cable housing 179 of the traverse lock body 178. A sealing gasket, such as an O-ring 202, is disposed around the tubular lower housing part 154 to seal against the lower bushing collar part 198.

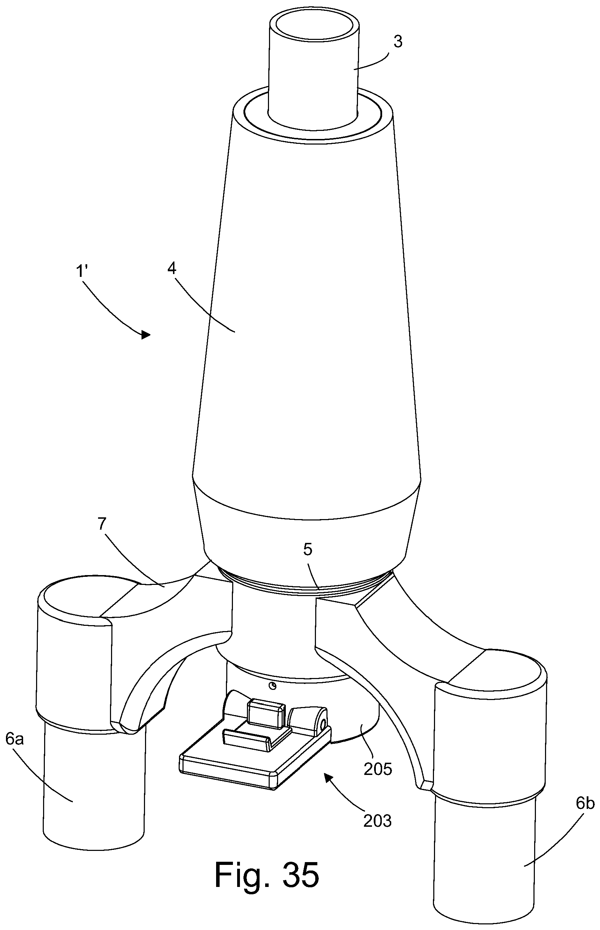

The lock bushing 197 is part of a safety mechanism 203 for avoiding unintentionally locking of the steering column lock 100 during riding the bike. The safety mechanism 203 will now be described in further details with reference to figs. 35 - 40 showing said safety mechanism 203 in further details.

As seen in fig. 35 the safety mechanism 203 is arranged between the opposite lower legs 6a,6b of the front fork 1', axially below the head tube 4 and the steerer tube 3 where said tubes 3;4 extends into the arch member 7. A trigger mechanism 204 for the safety mechanism 203 protrudes substantially radially in relation to the front fork 1' to thereby be easy to operate.

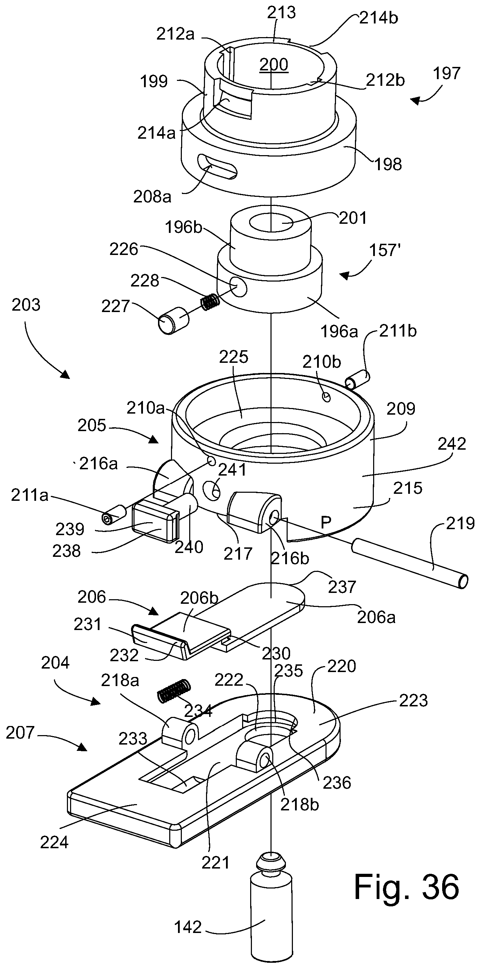

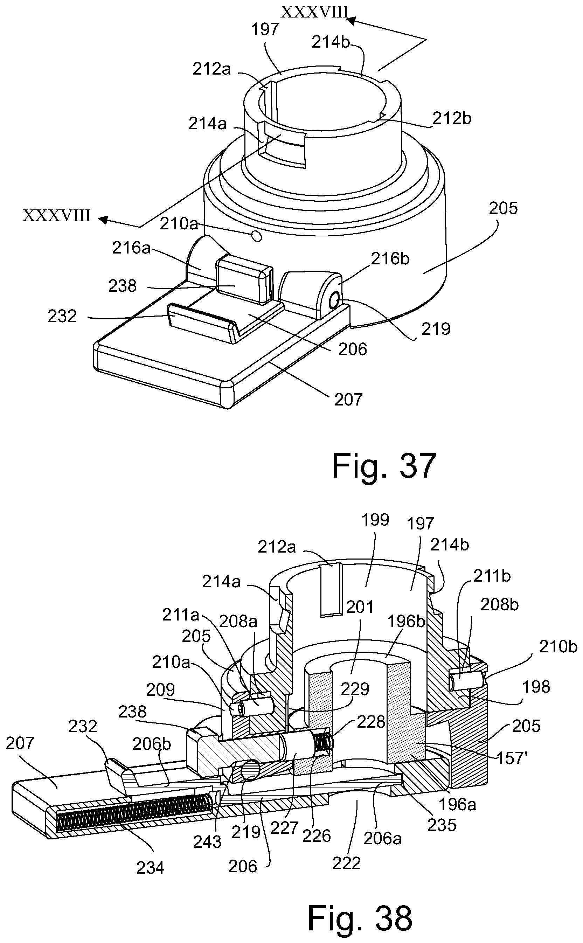

Fig. 36 is a perspective exploded view of the safety mechanism 203. Fig. 37 shows the safety mechanism 203 seen in fig. 36 in assembled state.

The safety mechanism 203 comprises the lock bushing 197, the modified cable lock housing 157', and the trigger mechanism 204. The trigger mechanism 204 comprises a third lock pin 227, a dust cover 206 and a lever 207.

The lower bushing collar part 198 of the lock bushing 197 has diametrically arranged slot openings 208a,208b, and an upper trigger housing part 209 of the trigger housing 205 has correspondingly diametrically arranged pin holes 210a,210b provided with protruding second lock pins 211a,211b. The second lock pins 211a,211b engage inside said slot openings 208a,208b whereby the lower bushing collar part 198 becomes coupled to the lock bushing 197.

The tubular upper bushing part 199 of the lock bushing 197 has opposite second slide tracks 212a,212b, which open into a free edge 213 of the tubular upper bushing part 199. The second slide tracks 212a,212b are provided and arranged to be aligned with the opposite first slide tracks 181a,181b of the modified interior tubular housing 176 to allow free ends of the cross bar arms 180a,180b to be received by both the first slide tracks 181a,181b and the second slide tracks 212a,212b when the modified interior tubular housing 176 moves axially, e.g. to magnetically lock and unlock the steering column lock 100 when the need arises.

The free edge 213 of the tubular upper bushing part 199 of the lock bushing 197 further has opposite second snap-coupling hooks 214a,214b configured to snap together with the first snap-coupling hooks 169a,169b of the upper housing 135 of the housing assembly 134 thereby holding the lock bushing 197 and the opposite upper housing legs 140a,140b of the upper housing 135 of the second lock part 126 firmly together.

The upper trigger housing part 209 of the trigger housing 205 extends into a lower trigger housing part 215 that has a female shaft bearing means 216a,216b having spaced apart opposite female shaft bearing parts 216a,216b arranged substantially along a chord of the circumference of said upper trigger housing part 209, and protruding radially therefrom at an axially recessed annular chord section 217 of said lower trigger housing part 215. The lever 207 has a male shaft bearing means 218a,218b having spaced apart opposite male shaft bearing parts 218a,218b that, pivotably about a pivot axis P, mates into the female shaft bearing parts 216a,216b. A shaft 219 extends through the male shaft bearing parts 218a,218b and the female shaft bearing parts 216a,216b thereby arranging the lever 207 pivotable in relation to the trigger housing 205. The shaft bearing means 216a,216b;218a,218b define the fulcrum, which is the support about which the lever 207 pivots.

The male shaft bearing means 218a,218b protrudes upright towards the trigger housing 205 from an elongate lever body 220 of the lever 207 on opposite long sides of a central elongate trigger cavity 221 in said elongate lever body 220. The central elongate trigger cavity 221 has a first through-going hole 222 at a rounded lever front end part 223 of the lever body 220, which first through-going hole 222 provides for passage of the lock part 142 of the cable lock 150.

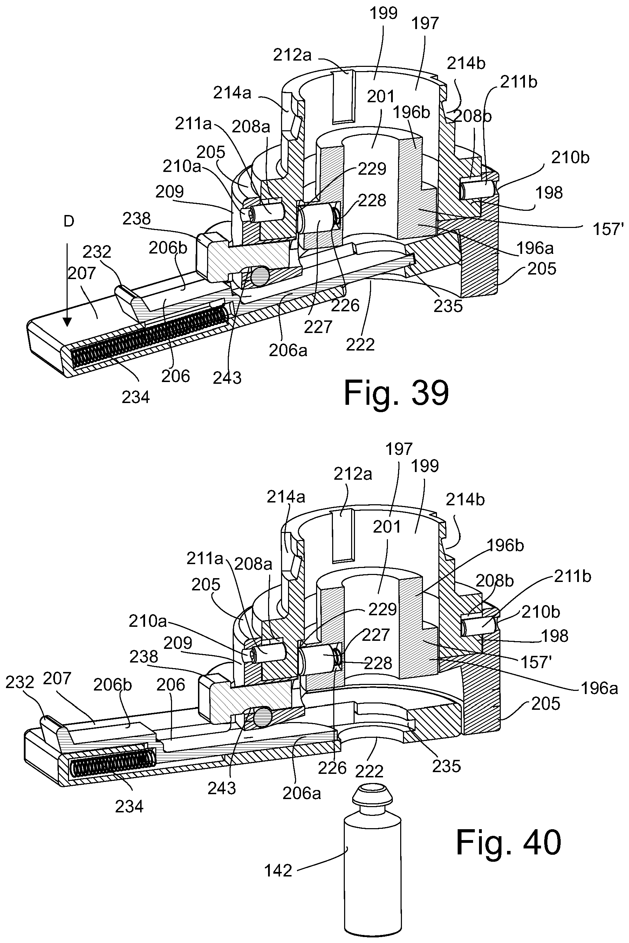

The trigger cavity 221 is adapted to accommodate a dust cover end part 206a of the dust cover 206, as seen in e.g. figs. 38 and 40, to thereby close for entry of e.g. dirt via the first through-going hole 222 into the steerer tube 3 and into the components of the steering column lock 100 when no cable lock part 142 is inserted.

An interior, radially protruding breast 225 is provided at the transition between the lower trigger housing part 215 and the upper trigger housing part 209 of the trigger housing 205, and the rounded lever front end part 223 protrudes inside the trigger housing 205 below said interior, radially protruding breast 225, as seen in figs. 38, 39 and 40.

The lever body 220 has a lever push part 224 opposite the rounded lever front end part 223. When said lever push part 224 is pushed downwards, as indicated by arrow D in fig. 39, the lever 204 pivots inside the trigger housing 205 about the shaft 219, and moves upwards until the rounded lever front end part 223 hits against the interior, radially protruding breast 225 thereby also displacing the modified cable lock housing 157' upwards.

The lower circumferential lock collar 196a of the modified cable lock housing 157' has a second through-going hole 226 that receives a third lock pin 227, which third lock pin 227, in the locking situation of fig. 39, is positioned spring-biased by means of a sixth spring 228 against a lock track 229 in the interior face of the lower bushing collar part 198. The lock track 229 is open at the free end of the lower bushing collar part 198 and aligned with the third lock pin 227, so that when the lever push part 224 is pushed downwards the modified cable lock housing 157' is lifted so that the third lock pin 227 snaps into the lock track 229 and keeps the lifted position of the modified cable lock housing 157' when the force on the lever push part 224 is relieved, as in the position seen in fig. 40.

The dust cover 206 has a handle pull part 206b in extension of the dust cover end part 206a via a step part 230, which step part 230 offsets the parallel planes of the handle pull part 206b and dust cover end part 206a along a normal to said planes. A free end 231 of the handle pull part 206b has a pull tab 232 to facilitate moving the dust cover 206 to cover and uncover the first through-going hole 222 of the lever 207. The bottom of the central elongate trigger cavity 221 has a spring groove 233 that accommodates a seventh spring 234 that spring-biases the step part 230 when the dust cover 206 is pulled along the lever push part 224 to obtain open access for entry of the lock part 142 into the modified cable lock housing 157' via the first through-going hole 222, as seen in fig. 40. The step part 230 is dimensioned so that the pull handle part 206b slides neatly on top of the lever push part 224, and so that the dust cover 206 can pivot together with the lever 207, as seen in fig. 39.

The lever front end part 223 has an engagement groove 235 at the corresponding terminal end 236 of the central elongate trigger cavity 221, which engagement groove 235 receives a free end 237 of the dust cover end part 206a when the first through-going hole 222 of the rounded lever front end part 223 is to be in the covering closed position seen in figs. 38 and 39.

A safety button 238 has a safety button head 239 and a safety button shaft 240. The safety button shaft 240 extends through a third through-going hole 241 that extends between the female shaft bearing parts 216a,216b radially through the circumferential wall 242 of the trigger housing 205. In the unlocked situation seen in fig. 38 the third lock pin 227 are situated partly inside the third through-going hole 241, as said third through-going hole 241 is in axial alignment with the second through-going hole 226 and the third lock pin 227.

The safety button 238 is easy to be radially displaced manually as the safety button head 239 is arranged exterior to the trigger housing 205, and is enlarged in relation to the safety button shaft 240. By pressing on the safety button head 239 towards the modified cable lock housing 157' the third lock pin 227 is also pushed on. So by applying a pressure to the safety button head 239 towards the modified cable lock housing 157' the third lock pin 227 can be radially moved from outside the trigger housing 205 so that the third lock pin 227 is set free of the third through-going hole 241 and can pass into the lock track 229 in the interior face of the lower bushing collar part 198 to allow the safety mechanism 203 to assume the positions seen in figs. 39 and 40.

To keep the safety button 238 from dropping out of the third through-going hole 241, and to allow the above radial movement of the safety button shaft 240 of the safety button 238, the safety button shaft 240 has an axially extended shaft recess 243 for receiving the perpendicularly arranged shaft 219. During the radial displacement of the safety button, the shaft 219 slides along the shaft recess 243.

The steering column locks of the present invention can be integrated in any bicycle that has sufficient radial space between the head tube and the steerer tube for mounting of the first lock part, and having a steerer tube of a sufficient internal diameter to have sufficient space for the second lock part, and for means to operate the steering column lock.

In all embodiments of the present invention the first lock part and the second lock part of the steering column lock are both fully integrated and hidden inside the steering column, and these lock parts cannot be manipulated unauthorized from outside the bike. A thief cannot reach any of the first lock part and the second lock part. Further, the mutual engagement between said lock parts are very strong, so in the exceptional circumstances that a thief successfully breaks the engagement between the lock parts by forcing the steerer tube to rotate despite the steering column lock being locked, components of the second lock part will still be present in the radial space and obstruct steering of the bicycle.

Emphasis is made that the present invention is not limited to be used on electric bikes. Any bike having a head tube around a steerer tube and sufficient radial space, either as constructed or obtainable by recessing, in-between said tubes, for the steering column to be equipped with said first and second lock parts can have a steering column lock of the present invention. Such other bikes may include, but are not limited to, simple hybrid bikes, mountain bikes and even classic road bikes.

## Claims

1. A bicycle steering column comprising a head tube (4), and a steerer tube (3), and incorporating a steering column lock (100), the steering column lock (100) comprises
a first lock part (101) having a first lock means and
a second lock part (126) having a second lock means,
the first lock means is arranged in a radial space (8) between the head tube (4) and the steerer tube (3),
the second lock means is arranged in the steerer tube (3) to co-operate with the first lock means, and
the second lock means comprises an electric motor (30), wherein
the first lock means comprises at least one first magnet (171) and the second lock means comprises at least one second magnet (172), and
wherein said at least one first magnet (171) and said at least one second magnet (172) are arranged to be in magnetically attracting contact without being in direct contact, whereby the magnetic attraction of the at least one second magnet to the at least one first magnet (171) will make an axially displaceable component of the second lock part (126), to which the at least one second magnet (172) is secured, to move along axially and bringing along an axially displaceable component of the first lock part (101) to which the at least one first magnet (171) is secured.

2. A bicycle steering column according to claim 1, **characterised in that** the steering column lock (100) comprises at least one first displaceable component (16',17') that is displaceable along the diameter of the steerer tube (3) and/or the steering column lock (100) comprises at least one second displaceable component (136,157,157',176,178,179) that is axially displaceable along the length of the steerer tube (3).

3. A bicycle steering column according to any of the preceding claims 1 or 2, **characterised in that** the steering column lock (100) is arranged in the bicycle steering column (2) without making holes in any of the steerer tube (3) and/or the head tube (4).

4. A bicycle steering column according to any of the preceding claims 1 - 3, **characterised in that** the second lock means comprises a first lock component (130), which first lock component (130) comprises the at least one first displaceable component (16',17'), preferably the first lock component (130) comprises two first displaceable components (16',17';) that are displaceable along the diameter of the steerer tube (3) towards and away from each other, and moving means to displace said two first displaceable components (16',17';) in relation to each other along the diameter of the steerer tube (3).

5. A bicycle steering column according to claim 4, **characterised in that** the moving means comprises a rotating part (19) interposed between said two opposite first displaceable components (16',17'), which moving means is operatively coupled to the electric motor (30) for rotating the rotating part (19) about the axis of the steerer tube (3).

6. A bicycle steering column according to any of the preceding claims 1 - 5, **characterised in that** the second lock means comprises an interior lock part (127) as an upper second displaceable component of the at least one second displaceable component that is axially displaceable along the length of the steerer tube (3); which interior lock part (127) has an exterior annular surface (128) provided with the at least one second magnet (172), preferably the interior lock part (127) has at least three second magnets (172) arranged annularly spaced apart on said exterior annular surface (128), more preferred four or more second magnets (172) are provided annularly spaced apart on the exterior annular surface (128) of said interior lock part (127).

7. A bicycle steering column according to any of the preceding claims 4, 5 or 6, **characterised in that** the second lock means comprises a holder (145) adapted to hold the first lock component (130), the holder (145) is secured to a top part (137) of an upper housing (135) and has opposite slots (151a,151b) for passage of opposite engagement wings (19a,19b) of the rotating part (19) upon rotation of the rotating part (19) by the electric motor (30).

8. A bicycle steering column according to claim 7, **characterised in that** the upper housing (135) extends from the top part (137) of the upper housing (135) into a forked lower part (139) having opposite upper housing legs (140a,140b), and said opposite upper housing legs (140a,140b) are configured to engage a female cable lock part (141;141') of a cable lock coupling means (135;141,141').

9. A bicycle steering column according to claims 8, **characterised in that** the female cable lock part (141) comprises a cable lock ring (156) surrounding the tubular lower housing part (154) of the interior tubular housing (136), and a cable lock housing (157) mounted at least partly inside the tubular lower housing part (154) of the interior tubular housing (136) and being configured to receive and interlock with the female cable lock part (141) of a cable lock (150), wherein the cable lock ring (156) is interconnected with the cable lock housing (157) via assembling means (162a,162b;163a,163b), wherein at least a part of the assembling means (162a,162b;163a,163b) extends through a circumferential wall (166) of the tubular lower housing part (154) of the interior tubular housing (136).

10. A bicycle steering column according to any of the preceding claims, **characterised in that** the first lock means comprises a first ring-shaped lock part (103) and a second ring-shaped lock part (104) arranged in a tubular casing (105) of the first lock part (10), which tubular casing (105) is secured to an interior face of the head tube (4), and wherein the first ring-shaped lock part (103) is secured at a top part (106) of the tubular casing (105) and the second ring-shaped lock part (104) is arranged in the tubular casing (105) axially displaceable towards and away from the first ring-shaped lock part (103), wherein the tubular upper housing part (153) engages the top part of the upper housing (135).

11. A bicycle steering column according to claim 10, **characterised in that** the first lock part (101) comprises a lower lock ring (119), which is secured to the steerer tube (3) at a bottom part of the tubular casing (105) as a means to prevent rotation of the second ring-shaped lock part (104) in relation to the steerer tube (3), preferably the lower lock ring (119) is configured to allow and control an axial displacement of the second ring-shaped lock part (104) within the tubular casing (105), wherein such axial displacement has a travel length shorter than a travel length at which the lower lock ring (119) and the second ring-shaped lock part (104) disengage.

12. A bicycle steering column according to any of the preceding claims 10 - 11, **characterised in that** the first ring-shaped lock part (103) has a first engagement means arranged at a lower first circumferential edge part (108), and the second ring-shaped lock part (104) has a second engagement means arranged at an upper second circumferential edge part (110), preferably the first engagement means arranged at the lower first circumferential edge part (108) is a plurality of annularly spaced apart axially protruding first teeth (109), which second engagement means faces the first engagement means and preferably is at least one axially protruding second tooth (111) configured to engage a complementary space (112) between adjacent first teeth (109) of the first engagement means, or vice versa.
wherein the second engagement means is configured for
- engaging the first engagement means when the second ring-shaped lock part (104) is in an upper axially displaced position in which the steering column lock (9;62) is locked and cannot rotate about the central axis of the steerer tube (3), and
- disengaging the first engagement means when the second ring-shaped lock part (104) is in a lower axially displaced position in which the steering column lock (9;62) is not locked and the second ring-shaped lock part (104) can rotate about the central axis of the steerer tube (3).

13. A bicycle steering column according to claim 12, **characterised in that** the axially displaceable second ring-shaped lock part (104) can travel a locking length that brings the first engagement means and the second engagement means in and out of engagement, preferably said length corresponds to at least the length of the at least one axially protruding second tooth (111).

14. A bicycle steering column according to any of the claims 10 - 13, **characterised in that** the second ring-shaped lock part (104) comprises the at least one first magnet (171), which is arranged on an interior annular surface (114) of the second ring-shaped lock part (104), preferably the second ring-shaped lock part (104) has at least three first magnets (171) arranged annularly spaced apart along said interior annular surface, more preferred eight first magnets, arranged in magnetically attracted relationship to the at least one second magnet (172).

15. A bicycle steering column according to any of the preceding claims 10 - 14, **characterised in that** the bicycle steering column comprises one or more of that
- an annular interior face (121) of the lower lock ring (119) has first knurlings (122),
- the lower lock ring (119) is secured to the steerer tube (3), optionally by means of glue, optionally further or alternatively secured by means of first lock pins,
- the top part (137) of the upper housing (135) is secured to the steerer tube (3), optionally by means of glue,
- an annular exterior face (124) of the bottom part (120) of the tubular casing (105) has second knurlings (125),
- the tubular casing (105) is secured to the head tube (4), optionally by means of glue,
- the second knurlings (125) are provided at an annular exterior face of a ring-shaped extension part (123) of the bottom part (120) of the tubular casing (105),
- the ring-shaped extension part (123) is a steel ring, or
- the steering column lock (100) has a push-button (157;157') that is arranged accessible at or via an end (33) of the steerer tube (3) to actuate the axial displacement of at least a part of the first lock component (130) to lock the steering column lock (100).

16. An E-bike or bicycle comprising the steering column lock (100) according to any of the preceding claims, **characterised in that** the steering column lock (100) further comprises one or more of
- a rechargeable battery (31),
- a USB socket (32) to at least charge the rechargeable battery (31), and
- a Bluetooth enabled printed circuit board (58), which has an antenna (59) to receive first operation signals from a remote device and send second operation signal to the Bluetooth enabled printed circuit board (58) to move the at least one first displaceable component that is displaceable along the diameter of the steerer tube (3).

## Patentansprüche

1. Fahrradlenksäule, die ein Kopfrohr (4) und ein Lenkerrohr (3) umfasst und eine Lenksäulenverriegelung (100) enthält,
wobei die Lenksäulenverriegelung (100) umfasst
ein erstes Verriegelungsteil (101), das ein erstes Verriegelungsmittel aufweist, und
ein zweites Verriegelungsteil (126), das ein zweites Verriegelungsmittel aufweist,
wobei das erste Verriegelungsmittel in einem radialen Raum (8) zwischen dem Kopfrohr (4) und dem Lenkerrohr (3) angeordnet ist,
wobei das zweite Verriegelungsmittel in dem Lenkerrohr (3) angeordnet ist, um mit dem ersten Verriegelungsmittel zusammenzuwirken, und
wobei das zweite Verriegelungsmittel einen Elektromotor (30) umfasst, wobei
das erste Verriegelungsmittel mindestens einen ersten Magneten (171) umfasst und das zweite Verriegelungsmittel mindestens einen zweiten Magneten (172) umfasst, und
wobei der mindestens eine erste Magnet (171) und der mindestens eine zweite Magnet (172) angeordnet sind, um in magnetisch anziehendem Kontakt zu sein, ohne in direktem Kontakt zu sein, wodurch die magnetische Anziehung des mindestens einen zweiten Magneten zu dem mindestens einen ersten Magneten (171) eine axial verschiebbare Komponente des zweiten Verriegelungsteils (126), an dem der mindestens eine zweite Magnet (172) befestigt ist, dazu bringt, sich axial entlang zu bewegen und eine axial verschiebbare Komponente des ersten Verriegelungsteils (101), an dem der mindestens eine erste Magnet (171) befestigt ist, mitzunehmen.

2. Fahrradlenksäule nach Anspruch 1, **dadurch gekennzeichnet, dass** die Lenksäulenverriegelung (100) mindestens eine erste verschiebbare Komponente (16', 17') umfasst, die entlang des Durchmessers des Lenkerrohrs (3) verschiebbar ist, und/oder die Lenksäulenverriegelung (100) mindestens eine zweite verschiebbare Komponente (136, 157, 157', 176, 178, 179) umfasst, die entlang der Länge des Lenkerrohrs (3) axial verschiebbar ist.

3. Fahrradlenksäule nach einem der vorhergehenden Ansprüche 1 oder 2, **dadurch gekennzeichnet, dass** die Lenksäulenverriegelung (100) in der Fahrradlenksäule (2) angeordnet ist, ohne Löcher in dem Lenkerrohr (3) und/oder dem Kopfrohr (4) herzustellen.

4. Fahrradlenksäule nach einem der vorhergehenden Ansprüche 1 - 3, **dadurch gekennzeichnet, dass** das zweite Verriegelungsmittel eine erste Verriegelungskomponente (130) umfasst, wobei die erste Verriegelungskomponente (130) die mindestens eine erste verschiebbare Komponente (16', 17') umfasst, wobei die erste Verriegelungskomponente (130) vorzugsweise zwei erste verschiebbare Komponenten (16', 17') umfasst, die entlang des Durchmessers des Lenkerrohrs (3) aufeinander zu und voneinander weg verschiebbar sind, und Bewegungsmittel, um die zwei ersten verschiebbaren Komponenten (16', 17') in Bezug zueinander entlang des Durchmessers des Lenkerrohrs (3) zu verschieben.

5. Fahrradlenksäule nach Anspruch 4, **dadurch gekennzeichnet, dass** das Bewegungsmittel einen Drehteil (19) umfasst, der zwischen den zwei gegenüberliegenden ersten verschiebbaren Komponenten (16', 17') angeordnet ist, wobei das Bewegungsmittel mit dem Elektromotor (30) wirkgekoppelt ist, um den Drehteil (19) um die Achse des Lenkerrohrs (3) zu drehen.

6. Fahrradlenksäule nach einem der vorhergehenden Ansprüche 1 - 5, **dadurch gekennzeichnet, dass** das zweite Verriegelungsmittel einen inneren Verriegelungsteil (127) als eine obere zweite verschiebbare Komponente der mindestens einen zweiten verschiebbaren Komponente umfasst, die entlang der Länge des Lenkerrohrs (3) axial verschiebbar ist; wobei der innere Verriegelungsteil (127) eine äußere ringförmige Oberfläche (128) aufweist, die mit dem mindestens einen zweiten Magneten (172) versehen ist, wobei der innere Verriegelungsteil (127) vorzugsweise mindestens drei zweite Magneten (172) aufweist, die ringförmig beabstandet auf der äußeren ringförmigen Oberfläche (128) angeordnet sind, wobei mehr bevorzugt vier oder mehr zweite Magneten (172) ringförmig beabstandet auf der äußeren ringförmigen Oberfläche (128) des inneren Verriegelungsteils (127) vorgesehen sind.

7. Fahrradlenksäule nach einem der vorhergehenden Ansprüche 4, 5 oder 6, **dadurch gekennzeichnet, dass** das zweite Verriegelungsmittel einen Halter (145) umfasst, der angepasst ist, um die erste Verriegelungskomponente (130) zu halten, wobei der Halter (145) an einem oberen Teil (137) eines oberen Gehäuses (135) befestigt ist und gegenüberliegende Schlitze (151a, 151b) für den Durchgang von gegenüberliegenden Eingriffsflügeln (19a, 19b) des Drehteils (19) bei Drehung des Drehteils (19) durch den Elektromotor (30) aufweist.

8. Fahrradlenksäule nach Anspruch 7, **dadurch gekennzeichnet, dass** sich das obere Gehäuse (135) von dem oberen Teil (137) des oberen Gehäuses (135) in einen gegabelten unteren Teil (139) erstreckt, der gegenüberliegende obere Gehäuseschenkel (140a, 140b) aufweist, und die gegenüberliegenden oberen Gehäuseschenkel (140a, 140b) konfiguriert sind, um in einen Kabelverriegelungsaufnahmeteil (141; 141') eines Kabelverriegelungskopplungsmittels (135; 141, 141') einzugreifen.

9. Fahrradlenksäule nach Anspruch 8, **dadurch gekennzeichnet, dass** der Kabelverriegelungsaufnahmeteil (141) einen Kabelverriegelungsring (156) umfasst, der den rohrförmigen unteren Gehäuseteil (154) des inneren rohrförmigen Gehäuses (136) umgibt, und ein Kabelverriegelungsgehäuse (157), das zumindest teilweise innerhalb des rohrförmigen unteren Gehäuseteils (154) des inneren rohrförmigen Gehäuses (136) montiert ist und konfiguriert ist, um den Kabelverriegelungsaufnahmeteil (141) einer Kabelverriegelung (150) aufzunehmen und mit diesem zu verriegeln, wobei der Kabelverriegelungsring (156) mit dem Kabelverriegelungsgehäuse (157) über Montagemittel (162a, 162b; 163a, 163b) verbunden ist, wobei sich zumindest ein Teil der Montagemittel (162a, 162b; 163a, 163b) durch eine Umfangswand (166) des rohrförmigen unteren Gehäuseteils (154) des inneren rohrförmigen Gehäuses (136) erstreckt.

10. Fahrradlenksäule nach einem der vorhergehenden Ansprüche, **dadurch gekennzeichnet, dass** das erste Verriegelungsmittel einen ersten ringförmigen Verriegelungsteil (103) und einen zweiten ringförmigen Verriegelungsteil (104) umfasst, die in einem rohrförmigen Gehäuse (105) des ersten Verriegelungsteils (10) angeordnet sind, wobei das rohrförmige Gehäuse (105) an einer Innenfläche des Kopfrohrs (4) befestigt ist, und wobei der erste ringförmige Verriegelungsteil (103) an einem oberen Teil (106) des rohrförmigen Gehäuses (105) befestigt ist und der zweite ringförmige Verriegelungsteil (104) in dem rohrförmigen Gehäuse (105) axial verschiebbar zu dem ersten ringförmigen Verriegelungsteil (103) hin und von diesem weg angeordnet ist, wobei der rohrförmige obere Gehäuseteil (153) in den oberen Teil des oberen Gehäuses (135) eingreift.

11. Fahrradlenksäule nach Anspruch 10, **dadurch gekennzeichnet, dass** der erste Verriegelungsteil (101) einen unteren Verriegelungsring (119) umfasst, der an dem Lenkerrohr (3) an einem unteren Teil des rohrförmigen Gehäuses (105) als ein Mittel zum Verhindern einer Drehung des zweiten ringförmigen Verriegelungsteils (104) in Bezug auf das Lenkerrohr (3) befestigt ist, wobei der untere Verriegelungsring (119) vorzugsweise konfiguriert ist, um eine axiale Verschiebung des zweiten ringförmigen Verriegelungsteils (104) innerhalb des rohrförmigen Gehäuses (105) zu ermöglichen und zu steuern, wobei eine solche axiale Verschiebung eine Hublänge aufweist, die kürzer als eine Hublänge ist, bei der sich der untere Verriegelungsring (119) und der zweite ringförmige Verriegelungsteil (104) lösen.

12. Fahrradlenksäule nach einem der vorhergehenden Ansprüche 10 - 11, **dadurch gekennzeichnet, dass** der erste ringförmige Verriegelungsteil (103) ein erstes Eingriffsmittel aufweist, das an einem unteren ersten Umfangskantenteil (108) angeordnet ist, und der zweite ringförmige Verriegelungsteil (104) ein zweites Eingriffsmittel aufweist, das an einem oberen zweiten Umfangskantenteil (110) angeordnet ist, wobei das erste Eingriffsmittel, das an dem unteren ersten Umfangskantenteil (108) angeordnet ist, vorzugsweise eine Vielzahl von ringförmig beabstandeten axial vorstehenden ersten Zähnen (109) ist, wobei das zweite Eingriffsmittel dem ersten Eingriffsmittel zugewandt ist und vorzugsweise mindestens ein axial vorstehender zweiter Zahn (111) ist, der konfiguriert ist, um in einen komplementären Raum (112) zwischen benachbarten ersten Zähnen (109) des ersten Eingriffsmittels einzugreifen, oder umgekehrt.
wobei das zweite Eingriffsmittel konfiguriert ist zum
- Eingreifen in das erste Eingriffsmittel, wenn sich der zweite ringförmige Verriegelungsteil (104) in einer oberen axial verschobenen Position befindet, in der die Lenksäulenverriegelung (9; 62) verriegelt ist und sich nicht um die Mittelachse des Lenkerrohrs (3) drehen kann, und
- Lösen des ersten Eingriffsmittels, wenn sich der zweite ringförmige Verriegelungsteil (104) in einer unteren axial verschobenen Position befindet, in der die Lenksäulenverriegelung (9; 62) nicht verriegelt ist und sich der zweite ringförmige Verriegelungsteil (104) um die Mittelachse des Lenkerrohrs (3) drehen kann.

13. Fahrradlenksäule nach Anspruch 12, **dadurch gekennzeichnet, dass** der axial verschiebbare zweite ringförmige Verriegelungsteil (104) eine Verriegelungslänge zurücklegen kann, die das erste Eingriffsmittel und das zweite Eingriffsmittel in und außer Eingriff bringt, wobei die Länge vorzugsweise mindestens der Länge des mindestens einen axial vorstehenden zweiten Zahns (111) entspricht.

14. Fahrradlenksäule nach einem der Ansprüche 10 - 13, **dadurch gekennzeichnet, dass** der zweite ringförmige Verriegelungsteil (104) den mindestens einen ersten Magneten (171) umfasst, der auf einer inneren ringförmigen Fläche (114) des zweiten ringförmigen Verriegelungsteils (104) angeordnet ist, wobei der zweite ringförmige Verriegelungsteil (104) vorzugsweise mindestens drei erste Magneten (171), die ringförmig beabstandet entlang der inneren ringförmigen Fläche angeordnet sind, mehr bevorzugt acht erste Magneten, die in magnetisch angezogener Beziehung zu dem mindestens einen zweiten Magneten (172) angeordnet sind, aufweist.

15. Fahrradlenksäule nach einem der vorhergehenden Ansprüche 10
- 14, **dadurch gekennzeichnet, dass** die Fahrradlenksäule eines oder mehrere der Folgenden umfasst:
- eine ringförmige Innenfläche (121) des unteren Verriegelungsrings (119) weist erste Rändelungen (122) auf,
- der untere Verriegelungsring (119) ist an dem Lenkerrohr (3) befestigt, optional mittels Klebstoff, optional ferner oder alternativ mittels erster Verriegelungsstifte befestigt,
- der obere Teil (137) des oberen Gehäuses (135) ist an dem Lenkerrohr (3) befestigt, optional mittels Klebstoff,
- eine ringförmige Außenfläche (124) des unteren Teils (120) des rohrförmigen Gehäuses (105) weist zweite Rändelungen (125) auf,
- das rohrförmige Gehäuse (105) ist an dem Kopfrohr (4) befestigt, optional mittels Klebstoff,
- die zweiten Rändelungen (125) sind an einer ringförmigen Außenfläche eines ringförmigen Verlängerungsteils (123) des unteren Teils (120) des rohrförmigen Gehäuses (105) vorgesehen,
- der ringförmige Verlängerungsteil (123) ist ein Stahlring, oder
- die Lenksäulenverriegelung (100) weist einen Druckknopf (157; 157') auf, der an oder über ein Ende (33) des Lenkerrohrs (3) zugänglich angeordnet ist, um die axiale Verschiebung von mindestens einem Teil der ersten Verriegelungskomponente (130) zu betätigen, um die Lenksäulenverriegelung (100) zu verriegeln.

16. E-Bike oder Fahrrad, das die Lenksäulenverriegelung (100) nach einem der vorhergehenden Ansprüche umfasst, **gekennzeichnet dadurch, dass** die Lenksäulenverriegelung (100) ferner eines oder mehrere der Folgenden umfasst:
- eine wiederaufladbare Batterie (31),
- eine USB-Buchse (32), um mindestens die wiederaufladbare Batterie (31) zu laden, und
- eine Bluetooth-fähige Leiterplatte (58), die eine Antenne (59) aufweist, um erste Betriebssignale von einer entfernten Vorrichtung zu empfangen und ein zweites Betriebssignal an die Bluetooth-fähige Leiterplatte (58) zu senden, um die mindestens eine erste verschiebbare Komponente, die entlang des Durchmessers des Lenkerrohrs (3) verschiebbar ist, zu bewegen.

## Revendications

1. Une colonne de direction de bicyclette comprenant un tube de direction (4) et un tube de fourche (3), et incorporant un verrou de colonne de direction (100), le verrou de colonne de direction (100) comprend une première partie de verrou (101) ayant un premier moyen de verrouillage et une deuxième partie de verrou (126) ayant un deuxième moyen de verrouillage,
le premier moyen de verrouillage est disposé dans un espace radial (8) entre le tube de direction (4) et le tube de fourche (3), le deuxième moyen de verrouillage est disposé dans le tube de fourche (3) pour coopérer avec le premier moyen de verrouillage, et le deuxième moyen de verrouillage comprend un moteur électrique (30), dans lequel
le premier moyen de verrouillage comprend au moins un premier aimant (171) et le deuxième moyen de verrouillage comprend au moins un deuxième aimant (172), et
dans lequel ledit au moins un premier aimant (171) et ledit au moins un deuxième aimant (172) sont disposés de manière à être en contact magnétique attractif sans être en contact direct, de sorte que l'attraction magnétique du au moins un deuxième aimant vers le au moins un premier aimant (171) fera déplacer un composant axialement déplaçable de la deuxième partie de verrou (126), auquel le au moins un deuxième aimant (172) est fixé, le long de l'axe et entraînera un composant axialement déplaçable de la première partie de verrou (101) auquel le au moins un premier aimant (171) est fixé.

2. Une colonne de direction de bicyclette selon la revendication 1, **caractérisée en ce que** le verrou de colonne de direction (100) comprend au moins un premier composant déplaçable (16', 17') qui est déplaçable le long du diamètre du tube de fourche (3) et/ou le verrou de colonne de direction (100) comprend au moins un deuxième composant déplaçable (136, 157, 157', 176, 178, 179) qui est axialement déplaçable le long de la longueur du tube de fourche (3).

3. Une colonne de direction de bicyclette selon l'une quelconque des revendications précédentes 1 ou 2, **caractérisée en ce que** le verrou de colonne de direction (100) est disposé dans la colonne de direction de bicyclette (2) sans faire de trous dans le tube de fourche (3) et/ou le tube de direction (4).

4. Une colonne de direction de bicyclette selon l'une quelconque des revendications précédentes 1 à 3, **caractérisée en ce que** le deuxième moyen de verrouillage comprend un premier composant de verrou (130), lequel premier composant de verrou (130) comprend le au moins un premier composant déplaçable (16', 17'), de préférence le premier composant de verrou (130) comprend deux premiers composants déplaçables (16', 17') qui sont déplaçables le long du diamètre du tube de fourche (3) vers et loin l'un de l'autre, et des moyens de déplacement pour déplacer lesdits deux premiers composants déplaçables (16', 17') l'un par rapport à l'autre le long du diamètre du tube de fourche (3).

5. Une colonne de direction de bicyclette selon la revendication 4, **caractérisée en ce que** les moyens de déplacement comprennent une partie rotative (19) interposée entre lesdits deux premiers composants déplaçables opposés (16', 17'), lesquels moyens de déplacement sont couplés de manière opérative au moteur électrique (30) pour faire tourner la partie rotative (19) autour de l'axe du tube de fourche (3).

6. Une colonne de direction de bicyclette selon l'une quelconque des revendications précédentes 1 à 5, **caractérisée en ce que** le deuxième moyen de verrouillage comprend une partie de verrou intérieure (127) en tant que deuxième composant déplaçable supérieur du au moins un deuxième composant déplaçable qui est axialement déplaçable le long de la longueur du tube de fourche (3); laquelle partie de verrou intérieure (127) a une surface annulaire extérieure (128) pourvue du au moins un deuxième aimant (172), de préférence la partie de verrou intérieure (127) a au moins trois deuxièmes aimants (172) disposés de manière espacée annulaire sur ladite surface annulaire extérieure (128), plus préférablement quatre ou plus de deuxièmes aimants (172) sont disposés de manière espacée annulaire sur la surface annulaire extérieure (128) de ladite partie de verrou intérieure (127).

7. Une colonne de direction de bicyclette selon l'une quelconque des revendications précédentes 4, 5 ou 6, **caractérisée en ce que** le deuxième moyen de verrouillage comprend un support (145) adapté pour tenir le premier composant de verrou (130), le support (145) est fixé à une partie supérieure (137) d'un boîtier supérieur (135) et a des fentes opposées (151a, 151b) pour le passage des ailes d'engagement opposées (19a, 19b) de la partie rotative (19) lors de la rotation de la partie rotative (19) par le moteur électrique (30).

8. Une colonne de direction de bicyclette selon la revendication 7, **caractérisée en ce que** le boîtier supérieur (135) s'étend de la partie supérieure (137) du boîtier supérieur (135) dans une partie inférieure fourchue (139) ayant des jambes de boîtier supérieur opposées (140a, 140b), et lesdites jambes de boîtier supérieur opposées (140a, 140b) sont configurées pour engager une partie de verrou de câble femelle (141; 141') d'un moyen de couplage de verrou de câble (135; 141, 141').

9. Une colonne de direction de bicyclette selon la revendication 8, **caractérisée en ce que** la partie de verrou de câble femelle (141) comprend un anneau de verrou de câble (156) entourant la partie inférieure tubulaire du boîtier (154) du boîtier tubulaire intérieur (136), et un boîtier de verrou de câble (157) monté au moins partiellement à l'intérieur de la partie inférieure tubulaire du boîtier (154) du boîtier tubulaire intérieur (136) et étant configuré pour recevoir et verrouiller avec la partie de verrou de câble femelle (141) d'un verrou de câble (150), dans lequel l'anneau de verrou de câble (156) est interconnecté avec le boîtier de verrou de câble (157) via des moyens d'assemblage (162a, 162b; 163a, 163b), dans lequel au moins une partie des moyens d'assemblage (162a, 162b; 163a, 163b) s'étend à travers une paroi circonférentielle (166) de la partie inférieure tubulaire du boîtier (154) du boîtier tubulaire intérieur (136).

10. Une colonne de direction de bicyclette selon l'une quelconque des revendications précédentes, **caractérisée en ce que** le premier moyen de verrouillage comprend une première partie de verrou annulaire (103) et une deuxième partie de verrou annulaire (104) disposées dans un boîtier tubulaire (105) de la première partie de verrou (10), lequel boîtier tubulaire (105) est fixé à une face intérieure du tube de direction (4), et dans lequel la première partie de verrou annulaire (103) est fixée à une partie supérieure (106) du boîtier tubulaire (105) et la deuxième partie de verrou annulaire (104) est disposée dans le boîtier tubulaire (105) de manière à pouvoir se déplacer axialement vers et loin de la première partie de verrou annulaire (103), dans lequel la partie supérieure du boîtier tubulaire (153) engage la partie supérieure du boîtier supérieur (135).

11. Une colonne de direction de bicyclette selon la revendication 10, **caractérisée en ce que** la première partie de verrou (101) comprend un anneau de verrou inférieur (119), qui est fixé au tube de fourche (3) à une partie inférieure du boîtier tubulaire (105) comme moyen pour empêcher la rotation de la deuxième partie de verrou annulaire (104) par rapport au tube de fourche (3), de préférence l'anneau de verrou inférieur (119) est configuré pour permettre et contrôler un déplacement axial de la deuxième partie de verrou annulaire (104) à l'intérieur du boîtier tubulaire (105), dans lequel ce déplacement axial a une longueur de course plus courte qu'une longueur de course à laquelle l'anneau de verrou inférieur (119) et la deuxième partie de verrou annulaire (104) se désengagent.

12. Une colonne de direction de bicyclette selon l'une quelconque des revendications précédentes 10 ou 11, **caractérisée en ce que** la première partie de verrou annulaire (103) a un premier moyen d'engagement disposé à une première partie de bord circonférentiel inférieure (108), et la deuxième partie de verrou annulaire (104) a un deuxième moyen d'engagement disposé à une deuxième partie de bord circonférentiel supérieure (110), de préférence le premier moyen d'engagement disposé à la première partie de bord circonférentiel inférieure (108) est une pluralité de premières dents (109) espacées annulairement et faisant saillie axialement, lequel deuxième moyen d'engagement fait face au premier moyen d'engagement et est de préférence au moins une deuxième dent (111) faisant saillie axialement et configurée pour s'engager dans un espace complémentaire (112) entre les premières dents adjacentes (109) du premier moyen d'engagement, ou vice versa, dans lequel le deuxième moyen d'engagement est configuré pour
- s'engager avec le premier moyen d'engagement lorsque la deuxième partie de verrou annulaire (104) est dans une position déplacée axialement supérieure dans laquelle le verrou de colonne de direction (9; 62) est verrouillé et ne peut pas tourner autour de l'axe central du tube de fourche (3), et
- se désengager du premier moyen d'engagement lorsque la deuxième partie de verrou annulaire (104) est dans une position déplacée axialement inférieure dans laquelle le verrou de colonne de direction (9; 62) n'est pas verrouillé et la deuxième partie de verrou annulaire (104) peut tourner autour de l'axe central du tube de fourche (3).

13. Une colonne de direction de bicyclette selon la revendication 12, **caractérisée en ce que** la deuxième partie de verrou annulaire (104) peut parcourir une longueur de verrouillage qui amène le premier moyen d'engagement et le deuxième moyen d'engagement à s'engager et se désengager, de préférence ladite longueur correspond au moins à la longueur de la au moins une deuxième dent faisant saillie axialement (111).

14. Une colonne de direction de bicyclette selon l'une quelconque des revendications 10 à 13, **caractérisée en ce que** la deuxième partie de verrou annulaire (104) comprend le au moins un premier aimant (171), qui est disposé sur une surface annulaire intérieure (114) de la deuxième partie de verrou annulaire (104), de préférence la deuxième partie de verrou annulaire (104) a au moins trois premiers aimants (171) disposés de manière espacée annulaire le long de ladite surface annulaire intérieure, plus préférablement huit premiers aimants, disposés en relation magnétique attractive avec le au moins un deuxième aimant (172).

15. Une colonne de direction de bicyclette selon l'une quelconque des revendications précédentes 10 à 14, **caractérisée en ce que** la colonne de direction de bicyclette comprend un ou plusieurs des éléments suivants :
- une face intérieure annulaire (121) de l'anneau de verrou inférieur (119) a des premières moletages (122),
- l'anneau de verrou inférieur (119) est fixé au tube de fourche (3), éventuellement par des moyens de collage, éventuellement en outre ou alternativement fixé par des premiers goupilles de verrouillage,
- la partie supérieure (137) du boîtier supérieur (135) est fixée au tube de fourche (3), éventuellement par des moyens de collage,
- une face extérieure annulaire (124) de la partie inférieure (120) du boîtier tubulaire (105) a des deuxièmes moletages (125), le boîtier tubulaire (105) est fixé au tube de direction (4), éventuellement par des moyens de collage,
- les deuxièmes moletages (125) sont disposés sur une face extérieure annulaire d'une partie d'extension annulaire (123) de la partie inférieure (120) du boîtier tubulaire (105),
- la partie d'extension annulaire (123) est un anneau en acier, ou
- le verrou de colonne de direction (100) a un bouton-poussoir (157; 157') qui est disposé accessible à ou via une extrémité (33) du tube de fourche (3) pour actionner le déplacement axial d'au moins une partie du premier composant de verrou (130) pour verrouiller le verrou de colonne de direction (100).

16. Un vélo électrique ou une bicyclette comprenant le verrou de colonne de direction (100) selon l'une quelconque des revendications précédentes, **caractérisé en ce que** le verrou de colonne de direction (100) comprend en outre un ou plusieurs des éléments suivants :
- une batterie rechargeable (31),
- une prise USB (32) pour au moins charger la batterie rechargeable (31), et
- une carte de circuit imprimé Bluetooth (58), qui a une antenne (59) pour recevoir des premiers signaux de fonctionnement d'un dispositif à distance et envoyer des seconds signaux de fonctionnement à la carte de circuit imprimé Bluetooth (58) pour déplacer le au moins un premier composant déplaçable qui est déplaçable le long du diamètre du tube de fourche (3).
